(19) Europäisches Patentamt
European Patent Office
Office européen des brevets

(11) EP 1 893 324 B1

(12) # EUROPÄISCHE PATENTSCHRIFT

(45) Veröffentlichungstag und Bekanntmachung des Hinweises auf die Patenterteilung:
**07.12.2011 Patentblatt 2011/49**

(21) Anmeldenummer: **06754126.8**

(22) Anmeldetag: **03.06.2006**

(51) Int Cl.:
***B01D 67/00*** (2006.01) ***B01D 69/06*** (2006.01)
***B01D 71/68*** (2006.01) ***B01D 69/02*** (2006.01)

(86) Internationale Anmeldenummer:
**PCT/EP2006/005346**

(87) Internationale Veröffentlichungsnummer:
**WO 2006/131290 (14.12.2006 Gazette 2006/50)**

(54) **MIKROFILTRATIONSMEMBRAN MIT VERBESSERTEM FILTRATIONSVERHALTEN**

MICROFILTRATION MEMBRANE WITH IMPROVED FILTRATION PROPERTIES

MEMBRANE DE MICROFILTRATION A COMPORTEMENT DE FILTRATION AMELIORE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026804**

(43) Veröffentlichungstag der Anmeldung:
**05.03.2008 Patentblatt 2008/10**

(73) Patentinhaber: **Membrana GmbH**
**42289 Wuppertal (DE)**

(72) Erfinder:
- **ANSORGE, Wolfgang**
  **D-45133 Essen (DE)**
- **SCHUSTER, Oliver**
  **D-58285 Gevelsberg (DE)**
- **WECHS, Friedbert**
  **D-63939 Wörth (DE)**
- **DOMBROWSKI, Klaus**
  **D-51069 Köln (DE)**

(74) Vertreter: **Schröder, Richard**
**CPW GmbH**
**Kasinostrasse 19-21**
**42103 Wuppertal (DE)**

(56) Entgegenhaltungen:
**WO-A-98/25758** **WO-A-99/04891**
**DE-A1- 4 230 077** **US-A- 4 933 081**
**US-A- 5 846 422** **US-A- 5 906 742**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 893 324 B1

## Beschreibung

Die Erfindung betrifft eine integral asymmetrische Membran zur Mikrofiltration auf Basis eines filmbildenden hydrophoben ersten Polymers aus der Gruppe der Sulfonpolymere, wobei die Membran eine poröse Struktur mit einer Porengrößenverteilung über der Membranwand besitzt und im Inneren der Membranwand eine Trennschicht mit einer minimalen Porengröße, von dieser ausgehend in Richtung auf die erste Oberfläche einen ersten asymmetrischen Bereich und in Richtung auf die zweite Oberfläche einen zweiten asymmetrischen Bereich mit in Richtung auf die Oberflächen zunehmenden Porengrößen. Die Erfindung betrifft des Weiteren ein Verfahren zur Herstellung solcher Membranen.

Mikroporöse Polymermembranen werden in verschiedensten Bereichen industrieller, pharmazeutischer oder medizinischer Anwendungen zur Präzisionsfiltration eingesetzt. In diesen Anwendungen gewinnen Membrantrennprozesse zunehmend an Bedeutung, da diese Prozesse den Vorteil bieten, dass die zu trennenden Stoffe thermisch nicht belastet oder gar geschädigt werden. Mikrofiltrationsmembranen ermöglichen beispielsweise die Entfernung feiner Teilchen oder Mikroorganismen mit Größen bis in den Submikronbereich und sind daher für die Herstellung von gereinigtem Wasser für die Verwendung in Laboratorien oder für die Halbleiterindustrie geeignet. Zahlreiche weitere Anwendungen von Membrantrennprozessen sind aus der Getränkeindustrie, der Biotechnologie oder der Abwassertechnologie bekannt.

Dabei werden bevorzugt Membranen mit einem hohen Grad an Asymmetrie verwendet, die eine Trennschicht besitzen und eine daran angrenzende mikroporöse Stützstruktur mit im Vergleich zur Trennschicht gröberen Poren. Die Poren in der Trennschicht bestimmen dabei die eigentliche Trenncharakteristik der Membran, d.h. durch die Größe der Poren in der Trennschicht wird die Größe der Partikel oder Moleküle kontrolliert, die von der Membran zurück gehalten werden. In der Anwendung werden derartige Membranen vielfach so eingesetzt, dass sie von der offenporigeren Seite angeströmt werden und so die mikroporöse Stützschicht als Vorfilter für die Trennschicht fungiert. Dadurch wird die Schmutzbeladungskapazität der Membran erhöht. Ein Fluid, das die Membran so durchströmt, tritt zuerst in die größeren Poren ein und zuletzt in die kleinen Poren der Trennschicht. Hierdurch werden Partikel, die im Fluid enthalten sind, in der grobporigen Stützschicht zurückgehalten, bevor sie die Trennschicht erreichen und diese verstopfen können.

Dabei stellen Sulfonpolymere wie z.B. Polysulfon oder Polyethersulfon ein vielfach verwendetes Membranmaterial dar, nicht zuletzt wegen ihrer hohen chemischen Stabilität, ihrer Temperaturstabilität oder der Sterilisierbarkeit der daraus hergestellten Membranen. Allerdings handelt es sich bei diesen Polymeren um hydrophobe Polymere, was ihren Einsatz für die Filtration wässriger Medien einschränkt. Darüber hinaus ist bekannt, dass Membranen aus hydrophoben Materialien ein starkes, unspezifisches Adsorptionsvermögen besitzen, woraus im Einsatz häufig eine schnelle Belegung der Membranoberfläche mit vorzugsweise höhermolekularen Bestandteilen der zu filtrierenden Flüssigkeit und in der Folge eine Verschlechterung der Permeabilität resultiert.

Die US-A-5 866 059 offenbart eine Polyethersulfonmembran für die Mikrofiltration, wobei die Membran eine ausgeprägt asymmetrische Struktur besitzt mit einer Haut mit relativ kleinen Poren an der einen, ersten Seite der Membran und ausgehend von dieser Seite über die Membranwand hinweg zunehmenden Porengrößen bis zur anderen zweiten Seite der Membran, wobei die Poren auf der zweiten Seite um den Faktor 50 bis 10000 größer sind als die Poren in der Haut auf der ersten Seite. Membranen mit einer derartigen Struktur sind zum einen anfällig gegen mechanische Beschädigungen bezüglich der Schicht mit den kleinsten Poren, d.h. der Trennschicht, die sich an der Oberfläche der Membran befindet. Zum anderen weisen die Membranen aufgrund der spezifischen asymmetrischen Struktur nur eine mäßige mechanische Stabilität auf.

Die gemäß der US-A-5 866 059 hergestellten Membranen sind hydrophob und können höchstens durch eine Nachbehandlung hydrophiliert werden. Demgegenüber weisen die in der US-A-6 045 899 offenbarten integral asymmetrischen Membranen auf Basis eines Sulfonpolymers hydrophile Eigenschaften auf, indem bei der Herstellung dieser Membranen ein hydrophiles Polymer wie z.B. Polyvinylpyrrolidon zur Polymerlösung gegeben wird.

Die US-A-5 906 742 offenbart ebenfalls hydrophile integral asymmetrische Polymermembranen auf Basis eines Sulfonpolymers. Diese Membranen besitzen eine mikroporöse Haut und daran angrenzend eine poröse Stützstruktur, wobei die poröse Stützstruktur einen an die Haut angrenzenden isotropen Bereich mit im wesentlichen konstanter Porengröße aufweist und des Weiteren einen an diesen isotropen Bereich angrenzenden asymmetrischen Bereich mit ausgehend vom isotropen Bereich zunehmenden Porengrößen. Der isotrope Bereich erstreckt sich über etwa 15-25% der Wand, wobei die Größe der Poren in dem isotropen Bereich etwas größer als die Größe der Poren in der mikroporösen Haut ist. Auch für diese Membranen ist die Haut, die die Trennschicht darstellt, anfällig gegenüber mechanischen Beschädigungen. Aufgrund des relativ breiten isotropen Bereichs mit geringen Porengrößen sind für diese Membranen relativ hohe Druckverluste bei der Durchströmung mit einem Fluid zu erwarten.

Zur Vermeidung der Anfälligkeit der Trennschicht gegen mechanische Beschädigung werden in der US-A-4 933 081 mikroporöse Polysulfonmembranen offenbart, deren Trennschicht sich innerhalb der Membranwand befindet. Diese Membranen besitzen eine Porengrößenverteilung über der Membranwand und weisen eine Schicht mit minimaler Porengröße in einem Abstand von vorzugsweise 1-30 $\mu$m von einer der Oberflächen der Membran auf. Ausgehend von dieser Schicht mit minimaler Porengröße nimmt die Porengröße zu beiden Oberflächen der Membran hin zu. Der Durchmesser der Poren auf der der Trennschicht zugewandten Oberfläche ist um den Faktor 10 bis 100 kleiner als derjenige der Poren in der der Trennschicht abgewandten Oberfläche, womit die Membranen der US-A-4 933 081 eine hohe Asymmetrie aufweisen. Die Membranen der US-A-4 933 081 sind jedoch hydrophob und müssen einer weiteren Behandlung unterzogen werden, um sie hydrophil zu machen.

Die EP-A-361 085 offenbart integral asymmetrische Membranen aus Polyethersulfon. In den Beispielen werden Hohlfasermembranen beschrieben, die im Außenbereich eine ca. 50-100 μm dicke feinporige, nach außen offene Struktur aufweisen, die zur Membranmitte in ein zunehmend grobporigeres Gefüge übergeht. Zur Lumenseite verdichtet sich die Struktur wieder. Die Innenoberfläche dieser Membran ist offenporig. Die Transmembranflüsse der in der EP-A-361 085 offenbarten Membranen sind relativ gering.

Es ist daher Aufgabe der vorliegenden Erfindung, eine Membran auf Basis eines Sulfonpolymers insbesondere für die Mikrofiltration zur Verfügung zu stellen, die hydrophile Eigenschaften aufweist, eine hohe Permeabilität sowie eine hohe Schmutzbeladungskapazität besitzt und gegen mechanische Angriffe unempfindlich ist. Es ist des Weiteren Aufgabe der vorliegenden Erfindung, ein Verfahren zur Herstellung einer solchen Membran zur Verfügung zu stellen.

Die erfindungsgemäße Aufgabe wird gelöst durch eine in Anspruch 1 beschriebene integral asymmetrische Membran insbesondere zur Mikrofiltration in Form einer Flachfolie auf Basis eines filmbildenden hydrophoben ersten Polymers aus der Gruppe der aromatischen Sulfonpolymere, wobei die Membran eine Membranwand mit einer ersten und einer zweiten porösen Oberfläche sowie einem zwischen den Oberflächen liegenden Wandinneren besitzt, eine poröse Struktur mit einer Porengrößenverteilung über der Membranwand aufweist und im Wandinneren eine Trennschicht mit einer minimalen Porengröße sowie von dieser ausgehend in Richtung auf die erste Oberfläche einen ersten asymmetrischen Bereich und in Richtung auf die zweite Oberfläche einen zweiten asymmetrischen Bereich mit in Richtung auf die Oberflächen zunehmenden Porengrößen, und wobei die zweite Oberfläche Poren mit einem mittleren Durchmesser von mindestens 1 μm aufweist, wobei die Membran dadurch gekennzeichnet ist, dass sie zu mindestens 40 Gew.-% aus dem filmbildenden hydrophoben ersten Polymer besteht, dass sie ein hydrophiles zweites Polymer umfasst, wobei die Konzentration des hydrophilen zweiten Polymers 0,1-10 Gew.-%, bezogen auf das Gewicht der Membran, beträgt, und dass die Trennschicht mit minimaler Porengröße sich in einem der ersten Oberfläche zugewandten Bereich der Membranwand befindet und die Porengröße im Anschluss an den zweiten asymmetrischen Bereich in Richtung auf die zweite Oberfläche ein Maximum durchläuft.

Da die Trennschicht mit minimaler Porengröße bei der erfindungsgemäßen Membran im Inneren der Membranwand liegt, ist sie gegenüber mechanischen Beschädigungen beispielsweise bei der Verarbeitung der Membran zur Einbettung in ein Gehäuse, insbesondere etwa beim Plissieren der Flachmembran, oder bei Reinigungszyklen in der Anwendung geschützt. Bevorzugt befindet sich die Trennschicht mit minimaler Porengröße in einem Abstand von 3 bis 30 % der Dicke der Membranwand von der ersten Oberfläche. Außer über geeignete Rasterelektronenmikroskop- oder Transmissions-Elektronenmikroskopaufnahmen kann das Vorhandensein einer innenliegenden Trennschicht auch mittels einfacher Anfärbetechniken veranschaulicht werden. Mittels Anfärbetechnik können die unterschiedlichen Porengrößen über dem Membranquerschnitt mit einem Lichtmikroskop bei geeigneter Vergrößerung sichtbar gemacht werden. Je nach Größe der Poren erfolgt eine unterschiedlich intensive Einfärbung der Membranstruktur, wobei die Einfärbung umso intensiver ist, je feinporiger die Struktur ist.

Erfindungsgemäß durchläuft die Porengröße im Anschluss an den zweiten asymmetrischen Bereich in Richtung auf die zweite Oberfläche ein Maximum, wobei das Maximum einen Abstand von der zweiten Oberfläche vorzugsweise von 3 bis 75 % der Dicke der Membranwand aufweist. In einer vorteilhaften Ausgestaltung der erfindungsgemäßen Membran befindet sich das Maximum der Porengröße in einem sich an den zweiten asymmetrischen Bereich anschließenden, im wesentlichen isotropen Bereich bzw. ist Teil dieses isotropen Bereichs, wobei sich der isotrope Bereich vorzugsweise über 15 bis 70% der Membranwand erstreckt. Hierbei wird im Rahmen der vorliegenden Erfindung unter einem im wesentlichen isotropen Bereich ein Bereich der Membranwand mit einer im wesentlichen konstanten Porengröße verstanden, wobei eine Beurteilung anhand von Rasterelektronenmikroskop- oder Transmissions-Elektronenmikroskopaufnahmen erfolgt. Der isotrope Bereich kann auch als ein Bereich mit sich durch die Membranwand erstrekkenden Strömungskanälen mit im wesentlichen konstantem mittleren Durchmesser angesehen werden. Wie bei jeder Membran variiert auch bei der erfindungsgemäßen Membran die aktuelle Porengröße etwas, d.h. sie weist eine gewisse Porengrößenverteilung auf, wenn auch die Porengrößenverteilung visuell isotrop erscheint. Daher sind von der Erfindung auch Ausführungen des im wesentlichen isotropen Bereichs umfasst, bei denen sich die Porengröße maximal um ca. 15-20% ändert. Durch das bevorzugte Vorhandensein eines isotropen Bereichs, in dem die Porengröße nicht weiter ansteigt, wird eine Verbesserung der mechanischen Stabilität bei gleichzeitiger Beibehaltung einer hohen Schmutzbeladungskapazität erreicht.

In Anschluss an das Maximum bzw. an den isotropen Bereich nimmt die Porengröße der erfindungsgemäßen Membran in Richtung auf die zweite Oberfläche ab. Dabei werden zur Erzielung einer hohen Permeabilität und einer hohen Schmutzbeladungskapazität der Membran eine hohe Offenporigkeit und insbesondere bei Vorliegen eines isotropen Bereichs große Porendurchmesser in der zweiten Oberfläche angestrebt, wobei die Poren in der Oberfläche kleiner sind als die Poren in der Schicht, in der das Maximum der Porengröße vorliegt. Erfindungsgemäß beträgt der

mittlere Durchmesser der Poren in der zweiten Oberfläche mindestens 1 μm und vorzugsweise mindestens 2 μm und besonders bevorzugt mindestens 5 μm.

Dabei beträgt in einer bevorzugten Ausführungsform der erfindungsgemäßen Membran das Verhältnis der mittleren Größe der Poren in der zweiten Oberfläche zu der mittleren Größe der Poren in der ersten Oberfläche mindestens 5 und besonders bevorzugt mindestens 10. Bei derartigen Membranen wird aufgrund der ausgeprägten Asymmetrie verbunden mit der hohen Offenheit der zweiten Oberfläche eine hohe Schmutzbeladungskapazität erreicht.

Aufgrund ihrer spezifischen Struktur besitzt die erfindungsgemäße Membran bei gleichzeitig hoher Schmutzbeladungskapazität eine hohe Stabilität bzw. mechanische Festigkeit, wobei diese Stabilität auch bei hohen Volumenporositäten der Membran erhalten wird. Derartige Festigkeiten werden bei vergleichbaren Membranen, bei denen sich der asymmetrische Bereich mit zunehmender Porengröße bis zur zweiten Oberfläche der Membranwand erstreckt, nicht erreicht. Die erfindungsgemäße Membran kann daher gleichzeitig eine hohe Volumenporosität aufweisen, die für eine hohe Permeabilität und damit für einen hohen Transmembranfluss sowie für eine hohe Schmutzbeladungskapazität vorteilhaft ist. Vorzugsweise weist die erfindungsgemäße Membran eine Volumenporosität von mindestens 75 Vol.-% auf und besonders bevorzugt mindestens 80 Vol.-%, wobei es sich als besonders günstig herausgestellt hat, wenn die Porosität zwischen 80 und 90 Vol.-% liegt .

Im Rahmen der vorliegenden Erfindung wird die Schmutzbeladungskapazität anhand des Verblockungsverhaltens der Membran bei der Durchströmung der Membran mit einem Prüfmedium auf Basis einer wässrigen Lösung von löslichem Instant-Kaffepulver ermittelt. Aus der Änderung des Transmembranflusses $TMF_{PM}$ dieses Prüfmediums durch die Membran über der Zeit lässt sich ein Aussage über das Verblockungsverhalten der Membran und damit über ihre Schmutzbeladungskapazität ableiten. Dabei zeigt die Membran eine hohe Schmutzbeladungskapazität, wenn sich der Transmembranfluss $TMF_{PM}$ des Prüfmediums über der Zeit nur wenig ändert, was darauf zurück zu führen ist, dass die Membran nicht nennenswert verblockt. Die erfindungsgemäße Membran weist bevorzugt einen Erhalt des Transmembranflusses $TMF_{PM}$ eines Prüfmediums, bestehend aus einer wässrigen Lösung von 0,04 g löslichem Instant-Kaffepulver pro Liter Wasser von mindestens 0,5, bevorzugt mindestens 0,65 auf, wobei der Erhalt des Transmembranflusses $TMF_{PM}$ definiert ist als das Verhältnis des $TMF_{PM}$ nach einer Messzeit von 10 min zum $TMF_{PM}$ zu Beginn der Messung.

Die erfindungsgemäße Aufgabe wird des Weiteren gelöst durch ein Verfahren zur Herstellung der erfindungsgemäßen Membran gemäß Anspruch 13, wobei das Verfahren die Schritte umfasst

a. Herstellung einer homogenen Gießlösung aus einer Polymerkomponente und einem Lösemittelsystem, wobei die Polymerkomponente 10 bis 25 Gew.-%, bezogen auf das Gewicht der Lösung, eines hydrophoben ersten Polymers aus der Gruppe der aromatischen Sulfonpolymere sowie 2 bis 20 Gew.-%, bezogen auf das Gewicht der Lösung, eines hydrophilen zweiten Polymers umfasst und das Lösemittelsystem aus 5 bis 80 Gew.-%, bezogen auf das Gewicht des Lösemittelsystems, eines Lösemittels für die Polymerkomponente, 0 bis 80 Gew.-%, bezogen auf das Gewicht des Lösemittelsystems, latentem Lösemittel für die Polymerkomponente sowie 0 bis 70 Gew.-%, bezogen auf das Gewicht des Lösemittelsystems, Nichtlöser für die Polymerkomponente besteht,

b. Temperieren der homogenen Gießlösung auf eine Ausformtemperatur,

c. Ausgießen der homogenen Gießlösung zu einem Film auf einen temperierbaren Träger, der eine Temperatur aufweist, die um mindestens 15°C höher ist als die Ausformtemperatur der Gießlösung, und der eine Geschwindigkeit $V_1$ aufweist,

d. Hindurchführen des auf dem Träger befindlichen Films durch eine klimatisierte Zone mit einer Temperatur im Bereich zwischen 35 und 55°C und einer relativen Luftfeuchtigkeit in Bereich von 40 bis 75 %

e. Einführen des auf dem Träger befindlichen Films in ein Koagulationsmedium und Einleiten der Koagulation des Films zur Ausbildung einer Membranstruktur,

f. Abziehen der Membranstruktur vom Träger mittels einer mit einer Geschwindigkeit $V_2$ bewegten Abzugseinrichtung innerhalb des Koagulationsmediums, wobei die Geschwindigkeit $v_2$ größer als die Geschwindigkeit $v_1$ des Trägers ist, wodurch die Membranstruktur eine Verstreckung erfährt,

g. Stabilisierung der Membranstruktur im Koagulationsmedium,

h. Extraktion der so erhaltenen Membran und anschließende Trocknung der Membran.

Das zur Herstellung der Gießlösung verwendete Lösungsmittelsystem ist auf das membranbildende Sulfonpolymer abzustimmen. Vorzugsweise umfasst das Lösungsmittelsystem polare aprotische Lösungsmittel wie, Dimethylformamid, Dimethylacetamid, Dimethylsulfoxid, N-Methylpyrrolidon oder deren Mischungen oder protische Lösemittel wie etwa ε-Caprolactam. Ferner kann das Lösungsmittelsystem bis zu 80 Gew.-% an latentem Lösemittel enthalten, wobei unter einem latenten Lösemittel im Rahmen der vorliegenden Erfindung ein solches verstanden wird, das das Sulfonpolymer nur schlecht oder erst bei erhöhter Temperatur löst. Im Fall der Verwendung von ε-Caprolactam als Lösemittel können beispielsweise γ-Butyrolacton, Propylencarbonat oder Polyalkylenglykol eingesetzt werden. Darüber hinaus kann das Lösungsmittelsystem Nichtlöser für das membranbildende Polymere enthalten, wie z.B. Wasser, Glycerin, niedermolekulare Polyethylenglykole mit einem Gewichtsmittel des Molekulargewichts von weniger als 1000 Dalton oder niedermolekulare Alkohole, wie etwa Ethanol oder Isopropanol.

Für die Durchführung des erfindungsgemäßen Verfahrens und für die Ausbildung der charakteristischen Struktur der erfindungsgemäßen Membran ist es von Vorteil, wenn die Viskosität der Gießlösung auf einen Wert unterhalb von 10 Pa s eingestellt wird, und von besonderem Vorteil, wenn sie auf einen Wert unterhalb von 5 Pa s eingestellt wird, wobei die Viskosität bei 40°C ermittelt wird. Die Einstellung der Viskosität kann insbesondere durch Auswahl und Konzentration des im erfindungsgemäßen Verfahren eingesetzten hydrophilen zweiten Polymers erfolgen. Das Ausgießen der Gießlösung zu einem Film kann auf an sich bekannte Weise erfolgen, beispielsweise mittels üblicher Formwerkzeuge wie Breitschlitzdüsen, Gießkästen oder Rakel. Spätestens im Formwerkzeug wird die Gießlösung auf die Ausformtemperatur eingestellt. Das Ausgießen der Gießlösung erfolgt auf einen temperierbaren Träger, wobei auch hier auf die üblichen Träger zurückgegriffen werden kann, vom dem die koagulierte Membran im späteren abgezogen werden kann. Beispielsweise können beschichtete Papiere oder Metallbänder eingesetzt werden. Vorzugsweise handelt es sich bei dem temperierbaren Träger um eine temperierbare Heizwalze, d.h. Gießwalze, auf die der Film ausgegossen wird. Erfindungswesentlich ist, dass die Temperatur des Trägers höher ist als die Ausformtemperatur der Gießlösung. Hierdurch entsteht ein Viskositätsgradient in der Gießlösung über die Dicke des ausgegossenen Films hinweg. Durch die erhöhte Trägertemperatur weist der ausgegossene Film im Bereich des Trägers eine geringere Viskosität auf, wodurch sich beim späteren Kontakt mit dem Koagulationsmedium grobporigere Strukturen ausbilden Die Trägertemperatur ist um mindestens 15°C und besonders bevorzugt um mindestens 20°C höher als die Ausformtemperatur.

Zur Erzeugung der asymmetrischen Struktur mit innenliegender Trennschicht ist es des Weiteren erforderlich, den auf dem Träger befindlichen Film durch eine klimatisierte Zone zu führen, in der eine definierte Temperatur und eine definierte relative Luftfeuchtigkeit eingestellt ist. Die Temperatur in der klimatisierten Zone liegt im Bereich zwischen 35 und 55°C, die relative Luftfeuchtigkeit wird bevorzugt auf Werte im Bereich von 40 bis 75% eingestellt. Die Verweilzeit des Films in der klimatisierten Zone sowie die Überströmgeschwindigkeit der Luft in der klimatisierten Zone über dem ausgegossenen Film ist so zu bemessen, dass eine Vorkoagulation durch Aufnahme der als Nichtlöser wirkenden Luftfeuchtigkeit induziert und eine Trennschicht mit minimaler Porengröße innerhalb der Membranwand erhalten wird. Die Bedingungen in der klimatisierten Zone haben gleichzeitig Einfluss auf die Größe der Poren in der Trennschicht.

Nach Durchlaufen der klimatisierten Zone wird der auf dem Träger befindliche Film in ein Koagulationsmedium geführt und eine Koagulation zur Ausbildung der Membranstruktur eingeleitet. Vorzugsweise ist das Koagulationsmedium auf eine Temperatur oberhalb der Raumtemperatur temperiert und weist besonders bevorzugt eine Temperatur oberhalb von 40°C auf. In einer bevorzugten Ausgestaltung des erfindungsgemäßen Verfahrens ist das Koagulationsmedium Wasser bzw. ein Wasserbad.

Im Koagulationsmedium wird der Film zunächst soweit zur Membranstruktur ausgefällt, dass diese bereits eine hinreichende Stabilität aufweist und vom Träger, d.h. vorzugsweise von der Gießwalze abgezogen werden kann. Das Abziehen von der Gießwalze erfolgt mittels einer Abzugseinrichtung, beispielsweise über eine Abzugswalze, wobei erfindungsgemäß die Abzugsgeschwindigkeit $v_2$ gegenüber der Geschwindigkeit des Trägers $v_1$ erhöht ist und die Membranstruktur eine Verstreckung erfährt. Vorzugsweise liegt das Verhältnis der Geschwindigkeit $v_2$ der Abzugseinrichtung zur Geschwindigkeit $v_1$ des Trägers im Bereich zwischen 1,05:1 bis 1,2:1. Hierdurch lässt sich eine hohe Oberflächenporosität an der Seite der entstehenden Membran erreichen, die dem Träger zugewandt war.

Im Anschluss an die Abzugseinrichtung wird in nachfolgenden Koagulationsbädern die Koagulation vervollständigt und die Membran stabilisiert. Diese Koagulationsbäder können gegenüber dem ersten, zuvor beschriebenen Koagulationsbad eine höhere Temperatur aufweisen. Die Temperatur kann auch von Bad zu Bad in Stufen erhöht werden. Dabei erfolgt in den Koagulationsbädern gleichzeitig eine Extraktion des Lösemittelsystems und in der Regel von Teilen des hydrophilen zweiten Polymers aus der Membranstruktur, so dass die Koagulationsbäder gleichzeitig als Wasch- oder Extraktionsbäder fungieren. Als Koagulations- bzw. Waschmedium in diesen Koagulations- bzw. Waschbädern wird bevorzugt Wasser eingesetzt.

Nach der Extraktion wird die erhaltene Membran beispielsweise mittels eines Walzentrockners getrocknet und die getrocknete Membran danach aufgewickelt. Während der Extraktion und Trocknung der Membran ist ebenfalls eine geringfügige Verstreckung von Vorteil, um bestimmte Membraneigenschaften wie z.B. die Oberflächenporosität und die Trenneigenschaften definiert einzustellen.

Erfindungsgemäß basieren die Membranen auf einem hydrophoben ersten Polymer aus der Gruppe der aromatischen Sulfonpolymere und enthalten darüber hinaus ein hydrophiles zweites Polymer. Als aromatische Sulfonpolymere können im Rahmen der vorliegenden Erfindung z.B. Polysulfone, Polyethersulfone, Polyphenylensulfone, Polyarylethersulfone oder Copolymere oder Modifikationen dieser Polymere oder Mischungen dieser Polymere untereinander eingesetzt werden. In einer bevorzugten Ausführungsform ist das hydrophobe erste Polymer ein Polysulfon oder ein Polyethersulfon mit den in nachstehenden Formeln (I) und (II) dargestellten wiederkehrenden Moleküleinheiten

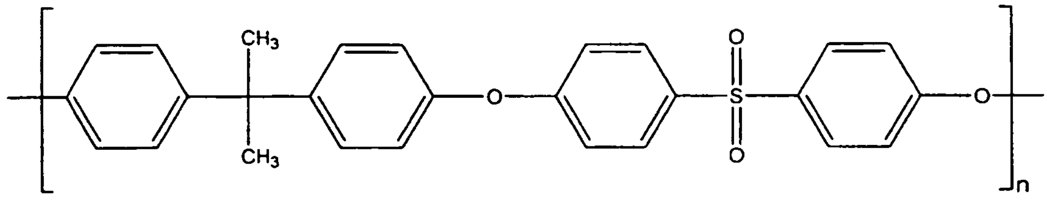

(I)

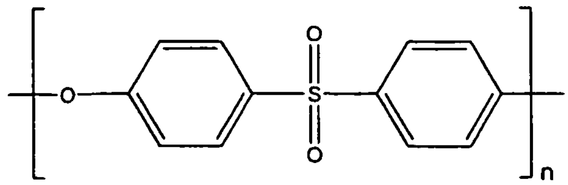

(II)

Besonders bevorzugt wird als hydrophobes erstes Polymer ein Polyethersulfon gemäß Formel (II) eingesetzt, da dieses eine geringere Hydrophobie aufweist als beispielsweise das Polysulfon.

Als hydrophiles zweites Polymer werden vorteilhafterweise langkettige Polymere eingesetzt, die eine gute Kompatibilität zu dem hydrophoben ersten Polymer aufweisen und die über wiederkehrende polymere Einheiten verfügen, die an sich hydrophil sind. Bevorzugt sind solche hydrophilen Polymere, die ein mittleres Molekulargewicht $M_w$ von mehr als 10 000 Dalton aufweisen. Die als hydrophile zweite Polymere eingesetzten Polymere haben gleichzeitig im erfindungsgemäßen Verfahren die Aufgabe, die Viskosität der homogenen Spinnlösung zu erhöhen, d.h. als Verdicker zu fungieren, weshalb diese Polymere vielfach auch als Verdicker bezeichnet werden. Daneben wirken diese Polymere auch als Porenbildner oder Nukleierungsmittel bei der Ausbildung der Membranstruktur. Vorzugsweise ist das hydrophile zweite Polymer Polyvinylpyrrolidon, Polyethylenglykol, Polyvinylalkohol, Polyglykolmonoester, Polysorbitat, wie z.B. Polyoxyethylensorbitanmonooleat, Carboxylmethylcellulose oder eine Modifikation oder ein Copolymer dieser Polymere. Besonders bevorzugt ist Polyvinylpyrrolidon. Es ist in einer weiteren bevorzugten Ausführungsform auch möglich, Mischungen von verschiedenen hydrophilen Polymeren einzusetzen und insbesondere Mischungen von hydrophilen Polymeren mit unterschiedlichen Molekulargewichten, z.B. Mischungen von Polymeren, deren Molekulargewicht sich um den Faktor 5 oder mehr unterscheidet. Vorzugsweise beträgt die Konzentration des hydrophilen zweiten Polymers in der erfindungsgemäßen Membran 0,5 bis 7 Gew.-%, bezogen auf das Gewicht der Membran. Diese Polymere können ggf. in der Membran noch chemisch oder physikalisch modifiziert werden. So kann Polyvinylpyrrolidon nachträglich z.B. durch Bestrahlung mit energiereicher Strahlung vernetzt und damit wasserunlöslich gemacht werden.

Zur Modifikation der Oberflächeneigenschaften der erfindungsgemäßen Membranen können Additive eingesetzt werden, welche die Stabilität der Membran, die Farbe, das Adsorptions- oder Absorptionsvermögen beeinflussen. Es sind auch Zusätze möglich, die die Ladung der Membran regeln, z.B. der Membran anionischen oder kationischen Charakter verleihen. Vorzugsweise enthält die erfindungsgemäße Membran des Weiteren ein hydrophiles drittes Polymer, welches von dem hydrophilen zweiten Polymer verschieden und ein hydrophil modifiziertes aromatisches Sulfonpolymer ist. Durch das Vorhandensein eines solchen Polymers werden insbesondere die Permeabilität der Membran sowie deren Adsorptionseigenschaften günstig beeinflusst und die Membranen weisen eine permanente Hydrophilie auf, die sich u.a. darin äußert, dass die Membran mehrfach dampfsterilisierbar ist und auch nach beispielsweise 30 Sterilisationszyklen die hydrophilen Eigenschaften i.w. unverändert erhalten bleiben. In einer besonders bevorzugten Ausführungsform liegt das hydrophil modifizierte aromatische Sulfonpolymer in der erfindungsgemäßen Membran in einer Konzentration von 1 bis 50 Gew.-%, bezogen auf das Gewicht der Membran, vor, wobei die Summe der Polymere sich zu 100% ergibt. Hierzu umfasst im Verfahren zur Herstellung der bevorzugten erfindungsgemäßen Membranen die Polymerkomponente des Weiteren ein hydrophiles drittes Polymer, welches von dem hydrophilen zweiten Polymer verschieden und ein hydrophil modifiziertes aromatisches Sulfonpolymer ist. Bevorzugt enthält die Gießlösung das hydrophil modifizierte aromatische Sulfonpolymer in einer Konzentration von 0,2 bis 20 Gew.-%, bezogen auf das Gewicht der Gießlösung, homogen gelöst.

Bei dem hydrophil modifizierten aromatischen Sulfonpolymer kann es sich um ein solches handeln, bei dem

hydrophile funktionelle Gruppen kovalent an das Sulfonpolymer gebunden sind. Es kann sich aber auch um ein Copolymer auf Basis eines Sulfonpolymers handeln, in dem hydrophile Segmente enthalten sind, beispielsweise um ein Copolymer aus einem Sulfonpolymer mit einem hydrophilen Polymer wie z.B. Polyvinylpyrrolidon oder Polyethylenglykol. Aus Gründen der Kompatibilität ist es von besonderem Vorteil, wenn das hydrophil modifizierte aromatische Sulfonpolymer auf dem hydrophoben ersten aromatischen Sulfonpolymer basiert, d.h. die Membranstruktur enthält eine Mischung aus einem hydrophoben ersten aromatischen Sulfonpolymer und einer hydrophilen Modifikation dieses Polymers. Sehr gute Ergebnisse werden erzielt, wenn es sich bei dem hydrophil modifizierten aromatischen Sulfonpolymer um ein sulfoniertes Sulfonpolymer handelt, wobei dieses sulfonierte Sulfonpolymer vorzugsweise einen Sulfonierungsgrad im Bereich von 3 bis 10 % aufweist. Erfindungsgemäße Membranen, die eine Kombination aus Polyethersulfon und sulfoniertem Polyethersulfon enthalten, weisen besonders hohe Permeabilitäten für Wasser und Proteine sowie eine geringe Neigung zur Adsorption z.B. von Proteinen und damit ein geringes Fouling auf.

Nicht zuletzt auf Grund ihrer besonderen Struktur und ihrer Oberflächeneigenschaften zeichnen sich die erfindungsgemäßen Membranen durch eine hohe Permeabilität und damit durch einen hohen Transmembranfluss für Wasser aus. Die erfindungsgemäßen Membranen weisen bevorzugt einen Transmembranfluss TMF von mindestens 10000 l/($m^2 \cdot h \cdot bar$) auf, wobei der Transmembranfluss in Abhängigkeit vom Durchmesser $d_{max}$ der maximalen Trennpore gleichzeitig der Bedingung (III) genügt, die die Abhängigkeit des Transmembranflusses von der Größe der Poren in der Trennschicht widerspiegelt:

$$TMF \geq 85000 \cdot d_{max}^2, \qquad (III)$$

wobei $d_{max}$ der Durchmesser maximalen Trennpore in µm ist und den Durchmesser der maximalen Pore in der Trennschicht darstellt. In einer bevorzugten Ausführungsform der Erfindung genügt der Transmembranfluss der Bedingung (IV):

$$TMF \geq 105000 \cdot d_{max}^2, \qquad (IV)$$

Der Durchmesser der maximalen Trennpore wird mittels der Blaspunktmethode (ASTM Nr. 128-61 und F 316-86) bestimmt, wozu beispielsweise die in der DE-A-36 17 724 beschriebene Methode geeignet ist. Dabei ergibt sich $d_{max}$ aus dem zum Blaspunkt zugehörigen Gasraumdruck $P_B$ nach der Beziehung (V)

$$d_{max} = \sigma_B / P_B \qquad (V)$$

Hierbei ist $\sigma_B$ eine Konstante, die hauptsächlich von der bei der Messung eingesetzten benetzenden Flüssigkeit abhängig ist. Für Wasser beträgt $\sigma_B$ bei 25°C 2,07 µm·bar. In einer besonders bevorzugten Ausführungsform beträgt der Transmembranfluss der erfindungsgemäßen Membran mindestens 15000 l/($m^2 \cdot h \cdot bar$).

Überraschenderweise zeigen die erfindungsgemäßen Membranen eine hervorragende Permeabilität für wässrige Proteinlösungen. Bevorzugt weisen die Membranen der Erfindung für eine wässrige BSA (Bovine Serum Albumin)-Lösung einen Filtratfluss von mindestens 750 l/h·$m^2$ auf, wobei der Filtratfluss 15 min nach Beginn einer Filtration einer wässrigen BSA-Lösung mit einer BSA-Konzentration von 2g/l und einem pH-Wert von 5 bei einem Transmembrandruck von 0,4 bar ermittelt wird. Besonders bevorzugt beträgt der Filtratfluss der wässrigen BSA-Lösung mindestens 1000 l/h·$m^2$, hervorragende erfindungsgemäße Membranen weisen einen Filtratfluss der wässrigen BSA-Lösung von mindestens 2000 lh·$m^2$ auf.

Außer durch einen hohen Filtratfluss für wässrige Proteinlösungen zeichnen die erfindungsgemäßen Membranen sich auch dadurch aus, dass der Filtratfluss für derartige Proteinlösungen über der Filtrierzeit eine hohe Stabilität zeigt, d.h. nur eine relativ geringe Abnahme des Filtratflusses über der Zeit festzustellen ist. Bevorzugte Membranen zeigen einen Filtratflusserhalt von mindestens 35%, wobei der Filtratflusserhalt definiert ist als das Verhältnis des Filtratflusses nach 120 min zum Filtratfluss nach 5 min bei einer Filtration einer wässrigen BSA-Lösung mit einer BSA-Konzentration von 2g/l und einem pH-Wert von 5 bei einem Transmembrandruck von 0,4 bar. Besonders bevorzugt beträgt der Filtratflusserhalt der erfindungsgemäßen Membranen mindestens 45% und in höchsten Maße bevorzugt

mindestens 50%. Membranen mit derartig günstigen Flusseigenschaften bei Filtration von Proteinlösungen sind im Stand der Technik nicht zu finden. Insbesondere werden die genannten Flusseigenschaften für BSA-Lösungen auch bereits für erfindungsgemäße Membranen mit relativ kleinen Poren in der Trennschicht festgestellt, d.h. vorzugsweise für Membranen, die eine nominelle Pore von 0,2 µm aufweisen. Dabei wird die nominelle Pore über das Rückhaltevermögen der Membran gegenüber spezifischen Mikroorganismen definiert. So hält beispielsweise eine Membran mit einer nominellen Pore von 0,2 µm Bakterien der Gattung Brevundimonas diminuta zurück, eine Membran mit nomineller Pore von 0,45 µm Bakterien der Gattung Serratia marcescens usw.. Weitere gebräuchliche nominelle Porengrößen sind 0,1µm, 0,6 µm und 1,2 µm. Die Prüfungen bzw. die Ermittlung der nominellen Porengrößen sind beispielsweise in der HIMA-Vorschrift No. 3, Vol. 4, 1982 (Health Industry Manufacturers Association) beschrieben.

Die erfindungsgemäßen Membranen in Form von Flachfolien, d.h. die erfindungsgemäßen Flachmembranen sind insbesondere zur Mikrofiltration geeignet. Derartige Membranen weisen in der Regel Durchmesser der maximalen Trennpore zwischen 0,01 und 10 µm, bevorzugt zwischen 0,1 und 5 µm und besonders bevorzugt zwischen 0,2µm und 2 µm auf. Vorzugsweise besitzt die erfindungsgemäße Flachmembran eine Dicke zwischen 10 und 300 µm, besonders bevorzugt zwischen 30 und 150 µm.

Die Erfindung wird nachfolgend an Hand der nachfolgenden Beispiele und Figuren näher erläutert, wobei der Umfang der Erfindung durch die Beispiele nicht eingeschränkt wird.

Es zeigen:

Fig. 1: Rasterelektronenmikroskopische (REM-) Aufnahme des Querschnitts der Membran gemäß Beispiel 1 bei 600-facher Vergrößerung.

Fig. 2: REM-Aufnahme eines Ausschnitts des Querschnitts der Membran gemäß Beispiel 1 im Bereich der Membranseite, die bei der Herstellung der Gießwalze zugewandt war (Walzenseite) mit der Schicht mit minimaler Porengröße bei 2700-facher Vergrößerung.

Fig. 3: REM- Aufnahme des Oberfläche der Membran gemäß Beispiel 1, die bei der Herstellung der Gießwalze zugewandt war (Walzenseite) bei 500-facher Vergrößerung.

Fig. 4: REM- Aufnahme des Oberfläche der Membran gemäß Beispiel 1, die bei der Herstellung der Gießwalze abgewandt war (Luftseite) bei 2000facher Vergrößerung.

Fig. 5: REM-Aufnahme des Querschnitts der Membran gemäß Beispiel 2 bei 600-facher Vergrößerung.

Fig. 6: REM-Aufnahme eines Ausschnitts des Querschnitts der Membran gemäß Beispiel 2 im Bereich der Membranseite, die bei der Herstellung der Gießwalze zugewandt war (Walzenseite) mit der Schicht mit minimaler Porengröße bei 2700-facher Vergrößerung.

Fig. 7: REM- Aufnahme des Oberfläche der Membran gemäß Beispiel 2, die bei der Herstellung der Gießwalze zugewandt war (Walzenseite) bei 500-facher Vergrößerung.

Fig. 8: REM- Aufnahme des Oberfläche der Membran gemäß Beispiel 2, die bei der Herstellung der Gießwalze abgewandt war (Luftseite) bei 2000-facher Vergrößerung.

Fig. 9: REM-Aufnahme des Querschnitts der Membran gemäß Beispiel 3 bei 600-facher Vergrößerung.

Fig. 10: REM-Aufnahme eines Ausschnitts des Querschnitts der Membran gemäß Beispiel 3 im Bereich der Membranseite, die bei der Herstellung der Gießwalze zugewandt war (Walzenseite) mit der Schicht mit minimaler Porengröße bei 2700-facher Vergrößerung.

Fig. 11: REM- Aufnahme des Oberfläche der Membran gemäß Beispiel 3, die bei der Herstellung der Gießwalze zugewandt war (Walzenseite) bei 500-facher Vergrößerung.

Fig. 12: REM- Aufnahme des Oberfläche der Membran gemäß Beispiel 3, die bei der Herstellung der Gießwalze abgewandt war (Luftseite) bei 2000-facher Vergrößerung.

In den Beispielen wurden die folgenden Methoden zur Charakterisierung der Membranen angewandt:

Ermittlung der Volumenporosität:

Es werden vier Proben von ca. 15 $cm^2$ der zu untersuchenden Membran eingewogen und in ca. 50 ml Wasser über 16 h gelagert. Anschließend werden die Proben aus dem Wasser genommen und überschüssiges Wasser mittels Löschpapier entfernt. Die so vorbehandelten Proben werden zur Ermittlung des Nassgewichts gewogen und danach bei 50°C über 16 h getrocknet. Nach Abkühlung wird das Gewicht der getrockneten Proben (Trockengewicht) ermittelt.

Die Volumenporosität wird aus dem Mittelwert der Wasseraufnahme (Nassgewicht minus Trockengewicht), bezogen auf den Mittelwert des Trockengewichts der Proben, unter Verwendung der Dichten für Wasser und das die Membranstruktur aufbauende Polymers (hydrophobes erstes Polymer) ermittelt.

Transmembranfluss (Wasserpermeabilität):

Aus der zu prüfenden Membran werden scheibenförmige Membranproben mit einem Durchmesser von 15 cm ausgestanzt und in einen geeigneten Probenhalter am Umfang fluiddicht so eingespannt, dass eine freie Messfläche von 43,20 $cm^2$ resultiert. Der Probenhalter befindet sich in einem Gehäuse, das von Wasser druckbeaufschlagt durchströmt werden kann. Die eingespannte Membranprobe wird dann von der Seite her, auf der sich die Trennschicht der Membran befindet, von auf 25°C temperiertem, vollentsalztem Wasser unter einem definierten Druck zwischen 0,4 und 1,0 bar durchströmt. Es wird das während einer Messzeit von 60 s durch die Membranprobe hindurch geströmte Wasservolumen gravimetrisch oder volumetrisch ermittelt.

Der Transmembranfluss TMF wird nach der Formel (VI)

$$TMF \left[\frac{l}{m^2 \cdot h \cdot bar}\right] = \frac{V_W}{\Delta t \cdot A_M \cdot \Delta p} \cdot 600 \qquad (VI)$$

ermittelt. Hierbei sind:

$V_w$ = durch die Membranprobe während der Messzeit hindurch geströmte Wasservolumen [ml]
$\Delta t$ = Messzeit [min]
$A_M$ = durchströmte Fläche der Membranprobe (43,20 $cm^2$)
$\Delta p$ = eingestellter Druck während der Messung [bar]

Ermittlung der Schmutzbeiadungskapazität

Die Schmutzbeladungskapazität wird anhand des Verblockungsverhaltens der Membran bei der Durchströmung der Membran mit einem Prüfmedium auf Basis von löslichem Instant-Kaffepulver ermittelt.

Als Prüfmedium wird eine Lösung von 200 mg löslichen Instant-Kaffepulvers in 5 l vollentsalztem Wasser in einem mit Rührer versehenen Druckbehälter vorgelegt und mittels des Rührers während der Messung homogen gehalten. Eine aus der zu untersuchenden Membran ausgestanzte Membranprobe mit einem Durchmesser von 50 mm wird so in einen Filterhalter eingespannt, dass die der Trennschicht abgewandte Seite, d.h. die offenporigere Seite, die die Anströmseite darstellt, während der Untersuchung vom Prüfmedium angeströmt wird. Die effektive Filterfläche beträgt 9,6 $cm^2$. Mit einem konstanten Druck von 0,4 bar wird das Prüfmedium aus dem Druckbehälter über einen Zeitraum von 10 min durch die Membran gefördert. Das Volumen der durchgeströmten Prüflösung wird über der Zeit aufgezeichnet und aus den ermittelten Daten der Transmembranfluss $TMF_{PM}$ der Prüflösung analog zum Transmembranfluss für Wasser über der Zeit ermittelt. Aus der Änderung des Transmembranflusses $TMF_{PM}$ über der Zeit, d.h. aus dem Verhältnis des $TMF_{PM}$ nach der Messzeit von 10 min zum $TMF_{PM}$ zu Beginn der Messung lässt sich ein Aussage über das Verblockungsverhalten der Membran und damit über ihre Schmutzbeladungskapazität ableiten. Dabei zeigt die Membran eine hohe Schmutzbeladungskapazität, wenn sich der Transmembranfluss $TMF_{PM}$ des Prüfmediums über der Zeit nur wenig ändert, was darauf zurückzuführen ist, dass die Membran nicht nennenswert verblockt.

Ermittlung des Filtratflusses einer wässrigen Rinder-Serum-Albumin Lösung (BSA-Lösung)

Der Filtratfluss einer wässrigen BSA-Lösung wird an einer Cross-Flow Laborapparatur mit rezirkulierendem Feed-Strom ermittelt. Von der zu untersuchenden Membran werden zwei Proben von je ca. 5,3 $cm^2$ parallel untersucht. Die Membranproben werden zunächst in einer Phosphat-Pufferlösung (pH 5, 67 mM) äquilibriert und dann in die Testzelle

eingebracht. Zunächst wird für die Phosphat-Pufferlösung der Fluss bei 0,4 bar während 60 min bzw. bis zum Erhalt stabiler Werte gemessen. Danach wird das Reservoir für den Feed-Strom mit einer BSA-Lösung (2g/l, in Phosphat-Puffer, pH 5) gefüllt und der Filtratfluss $J_{MF}$ [ l/(h · m$^2$)] durch die Membranprobe bei 0,4 bar kontinuierlich während 120 min gemessen.

Beispiel 1:

In einem beheizbaren Kessel wurden 55,31 kg einer auf 40°C temperierten Mischung aus 75 Gew.-% γ-Butyrolacton und 25 Gew.-% ε-Caprolactam vorgelegt und unter Rühren 1,05 kg sulfoniertes Polyethersulfon (SPES) mit einem Sulfonierungsgrad von 5% innerhalb 1 h gelöst. Anschließend wurden 13,95 kg Polyethersulfon (PES, Typ Ultrason E6020, Fa. BASF) unter Rühren eingestreut und während 4 h gelöst. Danach wurden 11,25 kg Polyvinylpyrrolidon (PVP, Typ K30, Fa. ISP) feinverteilt eingerührt und homogenisiert. Durch Anlegen von Vakuum und Beaufschlagung mit Stickstoff wurde der Sauerstoff aus dem Kessel weitgehend entfernt. Hiernach wurde der Kessel auf 95°C aufgeheizt und unter intensivem Rühren während 8 h eine homogene Lösung hergestellt. Nach Abkühlung der Lösung auf 80°C wurden 18,44 kg Polyethylenglykol PEG 200 langsam zugegeben, intensiv eingerührt und für 3 h homogenisiert. Danach wurde die Membranlösung auf 40°C abgekühlt und mittels Vakuum entgast. Die erhaltene homogene Lösung hatte bei 40°C eine Viskosität von 3,6 Pa s.

Die fertige Gießlösung wurde mittels eines auf 40°C temperierten Gießkastens auf einer auf 62°C temperierte Metall-Gießwalze zu einem Film mit einer Dicke von ca. 160 μm ausgegossen. Der auf der Gießwalze befindliche Film wurde durch eine Klimazone geführt und während ca. 11 s mit einem Klima von 44°C und 48% rel. Luftfeuchte beaufschlagt, bevor er in ein Koagulationsbad mit auf 62°C temperiertem Wasser eingeführt wurde. Nach einer Verweilzeit von 11 s zur Ausbildung der Membranstruktur wurde der Film mittels einer Abzugswalze mit einer gegenüber der Gießwalzengeschwindigkeit um 9 % erhöhten Geschwindigkeit von der Gießwalze abgezogen, wodurch der Film bzw. die Membranstruktur zur Öffnung der Oberflächenporen verstreckt wurde. In nachfolgenden Waschbädern wurde die Membran bei stufenweise auf 90°C ansteigenden Temperaturen in Wasser fixiert und das Lösemittel zusammen mit Großteilen des PVP extrahiert. Die Trocknung der Membran erfolgte mittels eines Walzentrockners. Innerhalb des Wasch- und Trockenbereichs erfolgte eine weitere Geschwindigkeitserhöhung von ca. 5%.

Die so hergestellte Membran war permanent hydrophil und spontan mit Wasser benetzbar und hatte eine mittels Blaspunktmethode bestimmte maximale Trennpore von 0,48 μm sowie eine nominelle Pore von 0,2 μm. Sie wies einen Transmembranfluss von ca. 27000 l/(m$^2$·h·bar) sowie eine Porosität von 83 Vol.-% auf. Der Filtratfluss für wässrige BSA-Lösung 15 min nach Beginn der Filtration wurde zu ca. 7400 l/h·m$^2$ ermittelt. Der Filtratfluss für BSA-Lösung nach 5 min und nach 120 min ergab sich zu 8200 l/h·m$^2$ bzw. zu 4500 l/h·m$^2$, so dass ein Filtratflusserhalt von 55% resultierte. Die Membran besaß eine hohe Schmutzbeladungskapazität. Im Test zeigte sie einen relativ konstanten Transmembranfluss $TMF_{PM}$ für das verwendete Prüfmedium über der Zeit; nach 10 min war der $TMF_{PM}$ nur um 20 % abgefallen.

Die Membran wies über ihren Querschnitt eine Struktur mit innenliegender Trennschicht auf, d.h. die Schicht mit minimaler Porengröße lag innerhalb der Membranwand in einem Abstand von ca. 10 μm von der Seite der Membran, die bei der Herstellung zunächst der Luft zugewandt war (Fig. 1, 2). Ausweislich der in Fig. 1 dargestellten REM-Aufnahme nahm die Porengröße ausgehend von der Schicht mit minimaler Porengröße zur Walzenseite hin in einem asymmetrischen Bereich zunächst zu, und blieb dann über einen Bereich von ca. 1/4 der Wandstärke in einem i.w. isotropen Bereich nahezu unverändert. Kurz vor der dann angrenzenden Membranoberfläche nahm die Porengröße zur Walzenoberfläche hin ab. Sowohl die Walzenseite (Fig. 3) als auch die Luftseite der Membran (Fig. 4) wiesen eine offenporige Struktur auf. Die mittlere Porengröße der Poren in der Walzenseite der Membran lag deutlich oberhalb von 5 μm.

Beispiel 2:

Es wurde wie in Beispiel 1 vorgegangen, wobei in der klimatisierten Zone jedoch eine Temperatur von 44°C und eine relative Luftfeuchte von 62% eingestellt wurde.

Die so erhaltene Membran hatte eine mittels Blaspunktmethode bestimmte maximale Trennpore von 0,65 μm sowie eine nominelle Pore von 0,45 μm. Sie wies einen Transmembranfluss von ca. 54000 l/(m$^2$·h·bar) auf und zeigte eine hohe Durchlässigkeit gegenüber BSA-Lösungen bei gleichzeitig geringer Abnahme der Durchlässigkeit über der Zeit. Die Membran besaß ebenfalls eine hohe Schmutzbeladungskapazität. Sie zeigte im Test über der Zeit einen relativ konstanten Transmembranfluss $TMF_{PM}$; nach 10 min war der $TMF_{PM}$ nur auf ca. 75 % des Ausgangswerts abgefallen.

Die Membran wies ebenfalls über ihren Querschnitt die erfindungsgemäße Struktur mit innenliegender Trennschicht auf (Fig. 5). Ausgehend von der Schicht mit minimaler Porengröße nimmt die Porengröße zu der Seite der Membran, die bei der Membranherstellung der Gießwalze zugewandt war, d.h. zur Walzenseite hin in einem asymmetrischen Bereich zunächst zu, und bleibt dann über einen Bereich von ca. 1/3 der Wandstärke i.w. unverändert. Kurz vor der dann angrenzenden Membranoberfläche nimmt die Porengröße zur Oberfläche hin ab. Die Schicht mit minimaler

Porengröße, d.h. die Trennschicht befand sich innerhalb der Membranwand in einem Abstand von ca. 10 bis 15 μm von der angrenzenden Oberfläche, d.h. von der Luftseite der Membran (Fig. 6). Walzenseite (Fig. 7) und Luftseite der Membran (Fig. 8) wiesen eine ausgeprägt offenporige Struktur auf.

Beispiel 3:

Es wurde wie in Beispiel 1 vorgegangen. Im Unterschied zu Beispiel 1 wurden die Gießwalze und das Koagulationsbad auf eine Temperatur von 70°C eingestellt. In der klimatisierten Zone herrschte eine Temperatur von 44°C und eine relative Luftfeuchte von 69%. Die Abzugswalze im Koagulationsbad hatte eine gegenüber der Gießwalzengeschwindigkeit um 10 % erhöhte Geschwindigkeit.

Die so erhaltene Membran hatte eine mittels Blaspunktmethode bestimmte maximale Trennpore von 0,87 μm sowie eine nominelle Pore von 0,60 μm. Sie wies einen Transmembranfluss von ca. 102 000 l/($m^2$·h·bar) auf und zeigte eine hohe Durchlässigkeit gegenüber BSA-Lösungen bei gleichzeitig geringer Abnahme der Durchlässigkeit über der Zeit. Die Membran besaß eine hohe Schmutzbeladungskapazität. Im Test zeigte sie einen relativ konstanten Transmembranfluss $TMF_{PM}$ für das verwendete Prüfmedium über der Zeit; der $TMF_{PM}$ war auch nach einer Stunde noch auf hohem Niveau.

Die Struktur der Membran ist aus den in Fig. 9 bis 12 gezeigten REM-Aufnahmen ersichtlich. Danach zeigte die Membran ebenfalls über ihren Querschnitt hinweg eine erfindungsgemäße integral asymmetrische Porenstruktur mit innenliegender Trennschicht (Fig. 9). Auch für diese Membran nimmt die Porengröße ausgehend von der Trennschicht zur Walzenseite hin zunächst zu, bleibt dann etwa ab der Wandmitte im wesentlichen konstant und nimmt anschließend zur Walzenseite der Membran hin ab. Die Schicht mit minimaler Porengröße, d.h. die Trennschicht befand sich innerhalb der Membranwand in einem Abstand von ca. 15 μm von der angrenzenden Oberfläche, d.h. von der Luftseite der Membran (Fig. 10). Die Walzenseite (Fig. 11) war offenporig mit großen Poren in der Oberfläche. Die Luftseite der Membran (Fig. 12) zeigte ebenfalls eine offenporige Struktur mit einer gleichförmigeren Größe der Poren.

Beispiel 4:

In einem beheizbaren Kessel wurden 55,31 kg einer auf 40°C temperierten Mischung aus 75 Gew.-% γ-Butyrolacton und 25 Gew.-% ε-Caprolactam vorgelegt und unter Rühren 15 kg Polyethersulfon (PES, Typ Ultrason E6020, Fa. BASF) eingestreut und während 4 h gelöst. Danach wurden 11,25 kg Polyvinylpyrrolidon

(PVP, Typ K30, Fa. ISP) feinverteilt eingerührt und homogenisiert. Durch Anlegen von Vakuum und Beaufschlagung mit Stickstoff wurde der Sauerstoff aus dem Kessel weitgehend entfernt. Hiernach wurde der Kessel auf 95°C aufgeheizt und unter intensivem Rühren während 8 h eine homogene Lösung hergestellt. Nach Abkühlung der Lösung auf 80°C wurden 18,44 kg Polyethylenglykol PEG 200 langsam zugegeben, intensiv eingerührt und für 3 h homogenisiert. Danach wurde die Gießlösung auf 40°C abgekühlt und mittels Vakuum entgast.

Die fertige Gießlösung wurde mittels eines auf 30°C temperierten Gießkastens auf einer auf 66°C temperierten Metall-Gießwalze zu einem Film mit einer Dicke von ca. 160 μm ausgegossen. Der auf der Gießwalze befindliche Film wurde durch eine Klimazone geführt und während ca. 11 s mit einem Klima von 42°C und 51 % rel. Luftfeuchte beaufschlagt, bevor er in ein Koagulationsbad mit auf 66°C temperiertem Wasser eingeführt wurde. Nach Ausbildung der Membranstruktur wurde der Film mittels einer Abzugswalze mit einer gegenüber der Gießwalzengeschwindigkeit um 6 % erhöhten Geschwindigkeit von der Gießwalze abgezogen, wodurch der Film bzw. die Membranstruktur zur Öffnung der Oberflächenporen verstreckt wurde. In nachfolgenden Waschbädern wurde die Membran bei stufenweise auf 90°C ansteigenden Temperaturen in Wasser fixiert und das Lösemittel zusammen mit Großteilen des PVP extrahiert. Die Trocknung der Membran erfolgte mittels eines Walzentrockners bei ca. 60-80°C. Innerhalb des Wasch- und Trockenbereichs erfolgte eine weitere Geschwindigkeitserhöhung von ca. 9%.

Die mittels Blaspunktmethode bestimmte maximale Trennpore der so erhaltenen Membran hatte eine Größe von 0,47 μm. Die nominelle Pore betrug 0,20 μm. Die Membran wies einen Transmembranfluss von ca. 27 400 l/($m^2$·h·bar) auf.

Die Membran zeigte ausweislich der REM-Aufnahmen eine asymmetrische Porenstruktur mit in der Wand liegender Trennschicht. Ausgehend von der Trennschicht ging die Struktur zu der Oberfläche, die bei der Membranherstellung der Gießwalze zugewandt war (Walzenseite), in eine ausgeprägt grobporige Struktur über. In direkter Nachbarschaft der Oberfläche verdichtete sich die Porenstruktur wieder etwas, wodurch eine gute mechanische Stabilität der Oberflächenschicht sowie der darunter liegenden grobporigen Schicht gewährleistet war. Zur anderen Oberfläche hin (Luftseite) wird die Struktur ebenfalls grobporiger, jedoch in deutlich geringerem Maße als zur Walzenseite hin.

Beispiel 5:

In einem beheizbaren Kessel wurde eine auf 40°C temperierte Mischung aus 46,45 kg γ-Butyrolacton und

15,49 kg ε-Caprolactam vorgelegt, in die unter Rühren zunächst 1,05 kg sulfoniertes Polyethersulfon (SPES) mit einem Sulfonierungsgrad von 5% und anschließend 13,95 kg Polyethersulfon (PES, Typ Ultrason E6020, Fa. BASF) unter Rühren eingestreut und während 4 h gelöst wurden. Danach wurden 3,5 kg der hochmolekularen PVP-Type K90 (Fa. ISP) feinverteilt eingerührt und homogenisiert. Durch Anlegen von Vakuum und Beaufschlagung mit Stickstoff wurde der Sauerstoff aus dem Kessel weitgehend entfernt. Hiernach wurde der Kessel auf 95°C aufgeheizt und unter intensivem Rühren während 8 h eine homogene Lösung hergestellt. Nach Abkühlung der Lösung auf 80°C wurden 19,56 kg Polyethylenglykol PEG 200 sehr langsam zugegeben, intensiv eingerührt und für 3 h homogenisiert. Danach wurde die Gießlösung auf 40°C abgekühlt und mittels Vakuum entgast.

Die fertige Gießlösung wurde mittels eines auf 30°C temperierten Gießkastens auf einer auf 66°C temperierten und mit einer Geschwindigkeit von 3,0 m/min bewegten Metall-Gießwalze zu einem Film mit einer Dicke von ca. 160 μm ausgegossen. Der auf der Gießwalze befindliche Film wurde durch eine Klimazone geführt und während ca. 11 s mit einem Klima von 41 °C und 47% rel. Luftfeuchte beaufschlagt, bevor er in ein Koagulationsbad mit auf 66°C temperiertem Wasser eingeführt wurde. Nach Ausbildung der Membranstruktur wurde der Film mittels einer Abzugswalze mit einer gegenüber der Gießwalzengeschwindigkeit um 6 % erhöhten Geschwindigkeit von der Gießwalze abgezogen, wodurch der Film bzw. die Membranstruktur zur Öffnung der Oberflächenporen verstreckt wurde. In nachfolgenden Waschbädern wurde die Membran bei stufenweise auf 90°C ansteigenden Temperaturen in Wasser fixiert und das Lösemittel zusammen mit Großteilen des PVP extrahiert. Die Trocknung der Membran erfolgte mittels eines Walzentrockners bei ca. 60-80°C. Innerhalb des Wasch- und Trockenbereichs erfolgte eine weitere Geschwindigkeitserhöhung von ca. 9%.

Die mittels Blaspunktmethode bestimmte maximale Trennpore der so erhaltenen Membran hatte eine Größe von 0,55 μm. Die Membran wies einen Transmembranfluss von ca. 45 000 l/($m^2$·h·bar) auf und zeigte eine hohe Durchlässigkeit gegenüber BSA-Lösungen.

Beispiel 6:

In einem beheizbaren Kessel wurden 22,645 kg N-Methylpyrrolidon (NMP) bei 40°C vorgelegt und unter Rühren zunächst 7,50 kg Polyethersulfon (PES) (Typ Ultrason E6020, Fa. BASF) und dann 2,063 kg der hochmolekularen PVP-Type K90 (Fa. ISP) feinverteilt eingerührt und homogenisiert. Durch Anlegen von Vakuum und Beaufschlagung mit Stickstoff wurde der Sauerstoff aus dem Kessel weitgehend entfernt. Hiernach wurde der Kessel auf 90°C aufgeheizt und unter intensivem Rühren während 6 h eine homogene Lösung hergestellt. Nach Abkühlung der Lösung auf 60°C wurde eine Mischung aus 1,618 kg Wasser und 16,175 kg Polyethylenglykol PEG 200 sehr langsam zugegeben, intensiv eingerührt und für 3 h homogenisiert. Danach wurde die Gießlösung auf 40°C abgekühlt und mittels Vakuum entgast.

Die fertige Gießlösung wurde mittels eines auf 40°C temperierten Gießkastens bei einer Fertigungsgeschwindigkeit von 6,0 m/min auf einer auf 60°C temperierten Metall-Gießwalze zu einem Film mit einer Dicke von ca. 160 μm ausgegossen. Der auf der Gießwalze befindliche Film wurde durch eine Klimazone geführt und während ca. 11 s mit einem Klima von 43°C und 57% rel. Luftfeuchte beaufschlagt, bevor er in ein Koagulationsbad mit auf 60°C temperiertem Wasser eingeführt wurde. In nachfolgenden Waschbädern wurde die Membran bei stufenweise auf 90°C ansteigenden Temperaturen in Wasser fixiert und das Lösemittel zusammen mit Großteilen des PVP extrahiert. Die Trocknung der Membran erfolgte mittels eines Walzentrockners bei ca. 60-80°C. Innerhalb des Wasch- und Trockenbereichs erfolgte eine weitere Geschwindigkeitserhöhung von ca. 25%.

Die mittels Blaspunktmethode bestimmte maximale Trennpore der so erhaltenen Membran hatte eine Größe von 0,56 μm. Der Transmembranfluss betrug ca. 36 000 l/($m^2$·h·bar).

## Patentansprüche

1. Integral asymmetrische Membran in Form einer Flachfolie insbesondere zur Mikrofiltration auf Basis eines filmbildenden hydrophoben ersten Polymers aus der Gruppe der aromatischen Sulfonpolymere, wobei die Membran eine Membranwand mit einer ersten und einer zweiten porösen Oberfläche sowie einem zwischen den Oberflächen liegenden Wandinneren aufweist, eine poröse Struktur mit einer Porengrößenverteilung über der Membranwand besitzt und im Wandinneren eine Trennschicht mit einer minimalen Porengröße sowie von dieser ausgehend in Richtung auf die erste Oberfläche einen ersten asymmetrischen Bereich und in Richtung auf die zweite Oberfläche einen zweiten asymmetrischen Bereich mit in Richtung auf die Oberflächen zunehmenden Porengrößen, und wobei die zweite Oberfläche Poren mit einem mittleren Durchmesser von mindestens 1 μm aufweist,
**dadurch gekennzeichnet, dass** die Membran zu mindestens 40 Gew.-% aus dem filmbildenden hydrophoben ersten Polymeren besteht, die Membran ein hydrophiles zweites Polymer umfasst, wobei die Konzentration des hydrophilen zweiten Polymers 0,1-10 Gew.-% bezogen auf das Gewicht der Membran, beträgt, die Trennschicht mit minimaler Porengröße sich in einem der ersten Oberfläche zugewandten Bereich der Membranwand befindet

und die Porengröße im Anschluss an den zweiten asymmetrischen Bereich in Richtung auf die zweite Oberfläche ein Maximum durchläuft.

**2.** Membran nach Anspruch 1, **dadurch gekennzeichnet, dass** sich das Maximum der Porengröße in einem sich an den zweiten asymmetrischen Bereich anschließenden im wesentlichen isotropen Bereich befindet, in dem die Porengröße im wesentlichen konstant ist, wobei sich der isotrope Bereich über 15 bis 70% der Membranwand erstreckt.

**3.** Membran nach einem oder beiden der Ansprüche 1 oder 2, **dadurch gekennzeichnet, dass** das aromatische Sulfonpolymer ein Polysulfon oder Polyethersulfon ist.

**4.** Membran nach einem oder mehreren der Ansprüche 1 bis 3, **dadurch gekennzeichnet, dass** das hydrophile zweite Polymer ein mittleres Molekulargewicht $M_w$ von mehr als 10 000 Dalton aufweist.

**5.** Membran nach Anspruch 4, **dadurch gekennzeichnet, dass** das zweite hydrophile Polymer Polyvinylpyrrolidon, Polyethylenglykol, Polyvinylalkohol, Polyglykolmonoester, Polysorbitat, Carboxylmethylcellulose, Polyacrylsäure, Polyacrylat oder eine Modifikation oder ein Copolymer dieser Polymere ist.

**6.** Membran nach einem oder mehreren der Ansprüche 1 bis 5, **dadurch gekennzeichnet, dass** sie des Weiteren ein hydrophiles drittes Polymer enthält, das von dem hydrophilen zweiten Polymer verschieden ist, wobei das hydrophile dritte Polymer ein hydrophil modifiziertes aromatisches Sulfonpolymer ist.

**7.** Membran nach Anspruch 6, **dadurch gekennzeichnet, dass** das hydrophil modifizierte aromatische Sulfonpolymer in einer Konzentration von 1 bis 50 Gew.-%, bezogen auf das Gewicht der Membran, vorliegt.

**8.** Membran nach einem oder beiden der Ansprüche 6 oder 7, **dadurch gekennzeichnet, dass** das hydrophil modifizierte aromatische Sulfonpolymer auf dem hydrophoben ersten aromatischen Sulfonpolymer basiert.

**9.** Membran nach einem oder mehreren der Ansprüche 6 bis 8, **dadurch gekennzeichnet, dass** das hydrophil modifizierte aromatische Sulfonpolymer ein sulfoniertes Sulfonpolymer ist.

**10.** Membran nach einem oder mehreren der Ansprüche 1 bis 9, **dadurch gekennzeichnet, dass** das Verhältnis der mittleren Größe der Poren in der ersten Oberfläche zu der mittleren Größe der Poren in der zweiten Oberfläche mindestens 5 beträgt.

**11.** Membran nach einem oder mehreren der Ansprüche 1 bis 10, **dadurch gekennzeichnet, dass** sie eine Volumenporosität von mindestens 75 Vol.-% aufweist.

**12.** Membran nach einem oder mehreren der Ansprüche 1 bis 11, **dadurch gekennzeichnet, dass** sie eine nominelle Pore von 0,2 μm aufweist.

**13.** Verfahren zur Herstellung einer Membran nach Anspruch 1, wobei das Verfahren die Schritte umfasst

a. Herstellung einer homogenen Gießlösung aus einer Polymerkomponente und einem Lösemittelsystem, wobei die Polymerkomponente 10 bis 25 Gew.-%, bezogen auf das Gewicht der Lösung, eines hydrophoben ersten Polymers aus der Gruppe der aromatischen Sulfonpolymere sowie 2 bis 20 Gew.-%, bezogen auf das Gewicht der Lösung, eines hydrophilen zweiten Polymers und das Lösemittelsystem aus 5 bis 80 Gew.-%, bezogen auf das Gewicht des Lösemittelsystems, eines Lösemittels für die Polymerkomponente, 0 bis 80 Gew.-%, bezogen auf das Gewicht des Lösemittelsystems, latentem Lösemittel für die Polymerkomponente sowie 0 bis 70 Gew.-%, bezogen auf das Gewicht des Lösemittelsystems, Nichtlöser für die Polymerkomponente besteht,
b. Temperieren der homogenen Gießlösung auf eine Ausformtemperatur,
c. Ausgießen der homogenen Gießlösung zu einem Film auf einen temperierbaren Träger, der eine Temperatur aufweist, die um mindestens 15°C höher ist als die Ausformtemperatur der Gießlösung, und der eine Geschwindigkeit $v_1$ aufweist,
d. Hindurchführen des auf dem Träger befindlichen Films durch eine klimatisierte Zone mit einer Temperatur im Bereich zwischen 35 und 55°C und einer relativen Luftfeuchtigkeit im Bereich von 40 bis 75%,
e. Einführen des auf dem Träger befindlichen Films in ein Koagulationsmedium und Einleiten der Koagulation des Films zur Ausbildung einer Membranstruktur,
f. Abziehen der Membranstruktur vom Träger mittels einer mit einer Geschwindigkeit $v_2$ bewegten Abzugsein-

richtung innerhalb des Koagulationsmediums, wobei die Geschwindigkeit $v_2$ größer als die Geschwindigkeit $v_1$ des Trägers ist, wodurch die Membranstruktur eine Verstreckung erfährt,
g. Stabilisierung der Membranstruktur im Koagulationsmedium,
h. Extraktion der so erhaltenen Membran und anschließende Trocknung der Membran.

**14.** Verfahren nach Anspruch 13, **dadurch gekennzeichnet, dass** das aromatische Sulfonpolymer ein Polysulfon oder Polyethersulfon ist.

**15.** Verfahren nach Anspruch 13 oder 14, **dadurch gekennzeichnet, dass** das hydrophile zweite Polymer ein mittleres Molekulargewicht $M_w$ von mehr als 10 000 Dalton aufweist.

**16.** Verfahren nach Anspruch 15, **dadurch gekennzeichnet, dass** als zweites hydrophiles Polymer Polyvinylpyrrolidon, Polyethylenglykol, Polyvinylalkohol, Polyglykolmonoester, Polysorbitat, Carboxylmethylcellulose, Polyacrylsäure, Polyacrylat oder eine Modifikation oder ein Copolymer dieser Polymere eingesetzt wird.

**17.** Verfahren nach einem oder mehreren der Ansprüche 13 bis 16, **dadurch gekennzeichnet, dass** die Viskosität der homogenen Gießlösung auf eine Viskosität unterhalb von 10 Pa s, ermittelt bei 40°C, eingestellt wird.

**18.** Verfahren nach einem oder mehreren der Ansprüche 13 bis 17, **dadurch gekennzeichnet, dass** die Gießlösung des Weiteren 0,2 bis 20 Gew.-%, bezogen auf das Gewicht der Gießlösung, eines hydrophilen dritten Polymers enthält, das von dem hydrophilen zweiten Polymer verschieden ist, wobei das hydrophile dritte Polymer ein hydrophil modifiziertes aromatisches Sulfonpolymer ist.

**19.** Verfahren nach Anspruch 18, **dadurch gekennzeichnet, dass** das hydrophil modifizierte aromatische Sulfonpolymer ein sulfoniertes Sulfonpolymer ist.

**20.** Verfahren nach einem oder mehreren der Ansprüche 13 bis 19, **dadurch gekennzeichnet, dass** das Verhältnis der Geschwindigkeit $v_2$ der Abzugseinrichtung zur Geschwindigkeit $v_1$ des Trägers im Bereich zwischen 1,05:1 bis 1,2:1 liegt.

**21.** Verfahren nach einem oder mehreren der Ansprüche 13 bis 20, **dadurch gekennzeichnet, dass** als Lösemittel ein polares aprotisches Lösemittel oder ein protisches Lösemittel eingesetzt wird.

## Claims

**1.** Integrally asymmetric membrane in the form of a flat sheet, in particular for microfiltration, based on a film-forming hydrophobic first polymer from the group of aromatic sulfone polymers, the membrane having a membrane wall with a first and a second porous surface and an interior situated between the surfaces, possessing a porous structure with a pore size distribution over the membrane wall, and having a separating layer in the wall's interior with a minimal pore size, and also having, in the direction from this separating layer towards the first surface, a first asymmetrical region, and, towards the second surface, a second asymmetrical region, with pore sizes increasing towards the surfaces, and the second surface having pores with a mean diameter of at least 1 $\mu$m, **characterized in that** the membrane comprises at least 40 wt.% of the film-forming hydrophobic first polymer and also comprises a hydrophilic second polymer, the concentration of the hydrophilic second polymer being 0.1-10 wt.% relative to the weight of the membrane, the separating layer with minimal pore size is located in a region of the membrane wall facing the first surface, and the pore size passes through a maximum in the direction from the second asymmetrical region towards the second surface.

**2.** Membrane according to Claim 1, **characterized in that** the maximum of the pore size is located in an essentially isotropic region adjacent to the second asymmetrical region, in which isotropic region the pore size is essentially constant, whereby the isotropic region extends over 15 to 70% of the membrane wall.

**3.** Membrane according to one or both of Claims 1 or 2, **characterized in that** the aromatic sulfone polymer is a polysulfone or a polyethersulfone.

**4.** Membrane according to one or more of Claims 1 to 3, **characterized in that** the hydrophilic second polymer has an average molecular weight $M_w$ of more than 10 000 daltons.

5. Membrane according to Claim 4, **characterized in that** the hydrophilic second polymer is polyvinylpyrrolidone, polyethylene glycol, polyvinyl alcohol, polyglycol monoester, polysorbitate, carboxymethylcellulose, polyacrylic acid, polyacrylate, or a modification or a copolymer of these polymers.

6. Membrane according to one or more of Claims 1 to 5, **characterized in that** it further contains a hydrophilic third polymer, which is different from the hydrophilic second polymer, whereby the hydrophilic third polymer is a hydrophilically modified aromatic sulfone polymer.

7. Membrane according to Claim 6, **characterized in that** the hydrophilically modified aromatic sulfone polymer is present in a concentration of 1 to 50 wt.% relative to the weight of the membrane.

8. Membrane according to one or both of Claims 6 or 7, **characterized in that** the hydrophilically modified aromatic sulfone polymer is based on the hydrophobic first aromatic sulfone polymer.

9. Membrane according to one or more of Claims 6 to 8, **characterized in that** the hydrophilically modified aromatic sulfone polymer is a sulfonated sulfone polymer.

10. Membrane according to one or more of Claims 1 to 9, **characterized in that** the ratio of the average size of the pores in the first surface to the average size of the pores in the second surface is at least 5.

11. Membrane according to one or more of Claims 1 to 10, **characterized in that** it has a volume porosity of at least 75 vol.%.

12. Membrane according to one or more of Claims 1 to 11, **characterized in that** it has a nominal pore of 0.2 μm.

13. Method for producing a membrane according to Claim 1, whereby the method comprises the following steps:

a. producing a homogeneous casting solution from a polymer component and a solvent system, the polymer component consisting of 10-25 wt.%, relative to the weight of the solution, of a hydrophobic first polymer from the group of aromatic sulfone polymers and 2-20 wt.%, relative to the weight of the solution, of a hydrophilic second polymer, and the solvent system consisting of 5-80 wt.%, relative to the weight of the solvent system, of a solvent for the polymer component, 0-80 wt.%, relative to the weight of the solvent system, of a latent solvent for the polymer component, as well as 0-70 wt.%, relative to the weight of the solvent system, of a non-solvent for the polymer component,
b. conditioning the homogeneous casting solution to a molding temperature.
c. pouring the homogeneous casting solution onto a carrier to form a film, which carrier can be temperature controlled and has a temperature that is at least 15°C higher than the molding temperature of the casting solution, and which carrier has a speed $V_1$,
d. conveying the film located on the carrier through a climatecontrolled zone with a temperature in the range from 35 to 55°C and a relative humidity in the range from 40 to 75%,
e. introducing the film located on the carrier into a coagulation medium and initiating the coagulation of the film for the formation of a membrane structure,
f. withdrawing the membrane structure from the carrier within the coagulation medium by means of withdrawal device moving with a speed of $v_2$, the speed $v_2$ being greater than the speed $v_1$ of the carrier, by which means the membrane structure is drawn,
g. stabilizing the membrane structure in the coagulation medium,
h. extracting the resulting membrane and subsequently drying the membrane.

14. Method according to Claim 13, **characterized in that** the aromatic sulfone polymer is a polysulfone or a polyethersulfone.

15. Method according to Claim 13 or 14, **characterized in that** the hydrophilic second polymer has an average molecular weight $M_w$ of more than 10 000 daltons.

16. Method according to Claim 15, **characterized in that** polyvinylpyrrolidone, polyethylene glycol, polyvinyl alcohol, polyglycol monoester, polysorbitate, carboxymethylcellulose, polyacrylic acid, polyacrylate, or a modification or a copolymer of these polymers is used as the hydrophilic second polymer.

**17.** Method according to one or more of Claims 13 to 16, **characterized in that** the viscosity of the homogeneous casting solution is set to a viscosity below 10 Pa s, determined at 40°C.

**18.** Method according to one or more of Claims 13 to 17, **characterized in that** the casting solution further contains 0.2-20 wt.%, relative to the weight of the casting solution, of a hydrophilic third polymer, which is different from the hydrophilic second polymer, the hydrophilic third polymer being a hydrophilically modified aromatic sulfone polymer.

**19.** Method according to Claim 18, **characterized in that** the hydrophilically modified aromatic sulfone polymer is a sulfonated sulfone polymer.

**20.** Method according to one or more of Claims 13 to 19, **characterized in that** the ratio of the speed $v_2$ of the withdrawal device to the speed $v_1$ of the carrier lies in the range between 1.05:1 and 1.2:1.

**21.** Method according to one or more of Claims 13 to 20, **characterized in that** a polar, aprotic solvent or a protic solvent is used as the solvent.

**Revendications**

**1.** Membrane intégralement asymétrique en forme de feuille plane et conçue en particulier pour la microfiltration, à base d'un premier polymère hydrophobe et filmogène faisant partie de l'ensemble des polymères de type polysulfone aromatique, laquelle membrane comporte une paroi de membrane dotée d'une première et d'une deuxième surfaces poreuses ainsi que d'un intérieur de paroi situé entre les deux surfaces, possède une structure poreuse présentant une distribution des tailles de pores sur toute la paroi de membrane, et comporte dans l'intérieur de paroi une couche séparatrice où la taille des pores est minimale, ainsi que, à partir de celle-ci, en direction de la première surface, un premier domaine asymétrique, et en direction de la deuxième surface, un deuxième domaine asymétrique, où la taille des pores augmente en direction de la surface, la deuxième surface présentant des pores dont le diamètre moyen vaut au moins 1 μm, **caractérisée en ce que** la membrane est constituée pour au moins 40 % en poids du premier polymère hydrophobe et filmogène, la membrane comprend un deuxième polymère hydrophile, présent en une proportion de 0,1 à 10 %, en poids rapporté au poids de la membrane, la couche séparatrice où la taille des pores est minimale se trouve dans un domaine de la paroi de membrane orienté vers la première surface, et la taille des pores passe par un maximum après le deuxième domaine asymétrique en direction de la deuxième surface.

**2.** Membrane selon la revendication 1, **caractérisée en ce que** le maximum de la taille des pores se situe dans un domaine essentiellement isotrope, faisant suite au deuxième domaine asymétrique, dans lequel la taille des pores est pratiquement constante et qui s'étend sur 15 à 70 % de la paroi de membrane.

**3.** Membrane selon l'une des revendications 1 et 2 ou aux deux, **caractérisée en ce que** le polymère de type polysulfone aromati-que est une polysulfone ou un poly(éther sulfone).

**4.** Membrane selon l'une ou plusieurs des revendications 1 à 3, **caractérisée en ce que** le deuxième polymère hydrophile possède une masse molaire moyenne $M_w$ de plus de 10 000 daltons.

**5.** Membrane selon la revendication 4, **caractérisée en ce que** le deuxième polymère hydrophile est une poly(vinyl-pyrrolidone), un polyéthylèneglycol, un poly(alcool vinylique), un monoester de polyglycol, un polysorbate, une carboxyméthyl-cellulose, un poly(acide acrylique), un polyacrylate, ou un dérivé modifié de tels polymères, ou un copolymère dérivé de tels polymères.

**6.** Membrane selon l'une ou plusieurs des revendications 1 à 5, **caractérisée en ce qu'**elle comprend en outre un troisième poly-mère hydrophile qui est différent du deuxième polymère hydrophile et qui est un polymère de type polysulfone aromatique modifié de ma-nière à être hydrophile.

**7.** Membrane selon la revendication 6, **caractérisée en ce que** le polymère de type polysulfone aromatique modifié de manière à être hydrophile y est présent en une proportion de 1 à 50 %, en poids rapporté au poids de la membrane.

**8.** Membrane selon l'une des revendications 6 et 7 ou aux deux, **caractérisée en ce que** le polymère de type polysulfone aroma-tique modifié de manière à être hydrophile dérive du premier polymère de type polysulfone aromatique hydrophobe.

**9.** Membrane selon l'une ou plusieurs des revendications 6 à 8, **caractérisée en ce que** le polymère de type polysulfone aroma-tique modifié de manière à être hydrophile est un polymère de type polysulfone sulfoné.

**10.** Membrane selon l'une ou plusieurs des revendications 1 à 9, **caractérisée en ce que** le rapport de la taille moyenne des pores de la première surface à la taille moyenne des pores de la deuxième surface vaut au moins 5.

**11.** Membrane selon l'une ou plusieurs des revendications 1 à 10, **caractérisée en ce qu'**elle présente une porosité volumique d'au moins 75 % en volume.

**12.** Membrane selon l'une ou plusieurs des revendications 1 à 11, **caractérisée en ce qu'**elle présente une taille nominale de pores de 0,2 μm.

**13.** Procédé de fabrication d'une membrane conforme à la revendication 1, lequel procédé comporte les étapes suivantes :

a) préparer une solution homogène pour coulée, à partir d'un composant polymère et d'un système solvant, lequel composant polymère comprend de 10 à 25 %, en poids rapporté au poids de la solution, d'un premier polymère hydrophobe faisant partie de l'ensemble des polymères de type polysulfone aromatique, ainsi que de 2 à 20 %, en poids rapporté au poids de la solution, d'un deuxième polymère hydrophile, et lequel système solvant est constitué de 5 à 80 %, en poids rapporté au poids du système solvant, d'un solvant du composant polymère, de 0 à 80 %, en poids rapporté au poids du système solvant, d'un solvant latent du composant polymère, et de 0 à 70 %, en poids rapporté au poids du système solvant, d'un non-solvant du composant polymère ;
b) amener la solution homogène pour coulée à l'équilibre thermique à une température de mise en forme ;
c) verser en coulée cette solution homogène de manière à en faire un film, sur un support qui peut être amené à l'équilibre thermique et qui se trouve à une température supérieure d'au moins 15 °C à la température de mise en forme de la solution pour coulée, et qui se déplace à une vitesse $v_1$ ;
d) faire passer le film, encore sur le support, dans une zone climatisée où règne une température de 35 à 55 °C et où l'humidité relative de l'air vaut de 40 à 75 % ;
e) introduire le film, toujours sur le support, dans un milieu de coagulation, et amorcer la coagulation du film conduisant à la formation d'une structure de membrane ;
f) enlever la structure de membrane du support au sein du milieu de coagulation, au moyen d'un dispositif d'enlevage qui est déplacé à une vitesse v2 qui est supérieure à la vitesse v1 du support, ce qui fait que la structure de membrane subit un étirage ;
g) stabiliser la structure de membrane dans le milieu de coagulation ;
h) extraire la membrane ainsi obtenue et la faire ensuite sécher.

**14.** Procédé selon la revendication 13, **caractérisé en ce que** le polymère de type polysulfone aromatique est une polysulfone ou un poly(éther sulfone).

**15.** Procédé selon la revendication 13 ou 14, **caractérisé en ce que** le deuxième polymère hydrophile possède une masse molaire moyenne $M_w$ de plus de 10 000 daltons.

**16.** Procédé selon la revendication 15, **caractérisé en ce que** le deuxième polymère hydrophile est une poly(vinyl-pyrrolidone), un polyéthylèneglycol, un poly(alcool vinylique), un monoester de polyglycol, un polysorbate, une carboxyméthyl-cellulose, un poly(acide acrylique), un polyacrylate, ou un dérivé modifié de tels polymères, ou un copolymère dérivé de tels polymères.

**17.** Procédé selon l'une ou plusieurs des revendications 13 à 16, **caractérisé en ce que** l'on ajuste la viscosité de la solution homogène pour coulée à une valeur inférieure à 10 Pa.s, valeur mesurée à 40 °C.

**18.** Procédé selon l'une ou plusieurs des revendications 13 à 17, **caractérisé en ce que** la solution pour coulée contient en outre de 0,2 à 20 %, en poids rapporté au poids de la solution pour coulée, d'un troisième polymère hydrophile, qui est différent du deuxième polymère hydrophile et qui est un polymère de type polysulfone aromatique modifié de manière à être hydrophile.

**19.** Procédé selon la revendication 18, **caractérisé en ce que** le polymère de type polysulfone aromatique modifié de manière à être hydrophile est un polymère de type polysulfone sulfoné.

**20.** Procédé selon l'une ou plusieurs des revendications 13 à 19, **caractérisé en ce que** le rapport de la vitesse v2 du dispositif d'enlevage à la vitesse v1 du support se situe dans l'intervalle allant de 1,05/1 à 1,2/1.

**21.** Procédé selon l'une ou plusieurs des revendications 13 à 20, **caractérisé en ce que** l'on utilise comme solvant un solvant aprotique polaire ou un solvant protique.

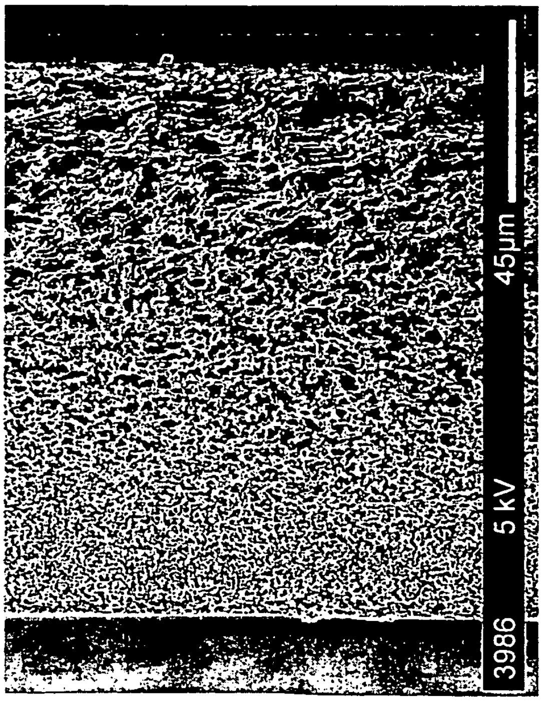


Fig. 1

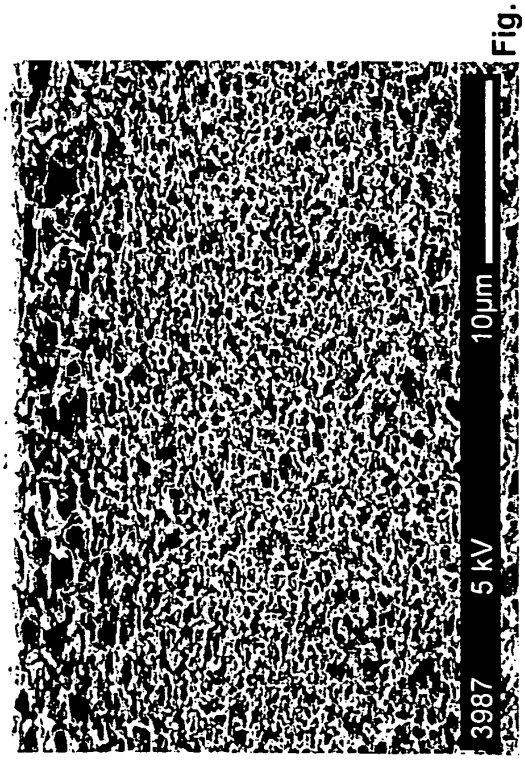


Fig. 2

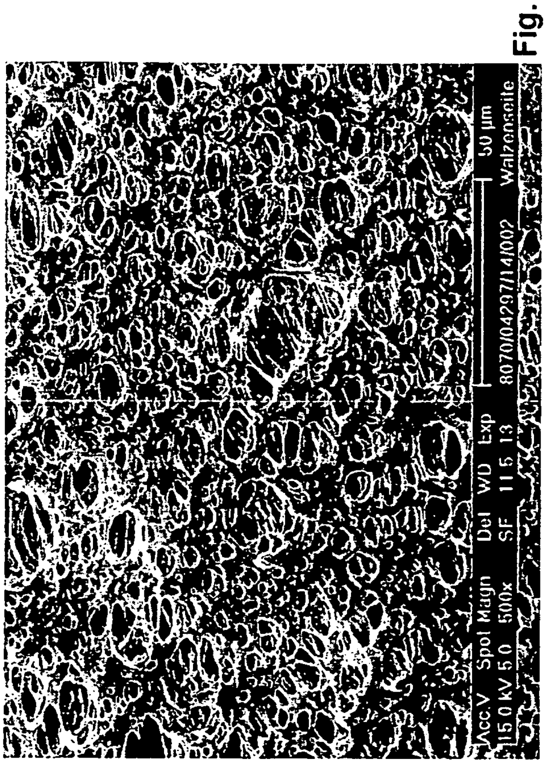


Fig. 3

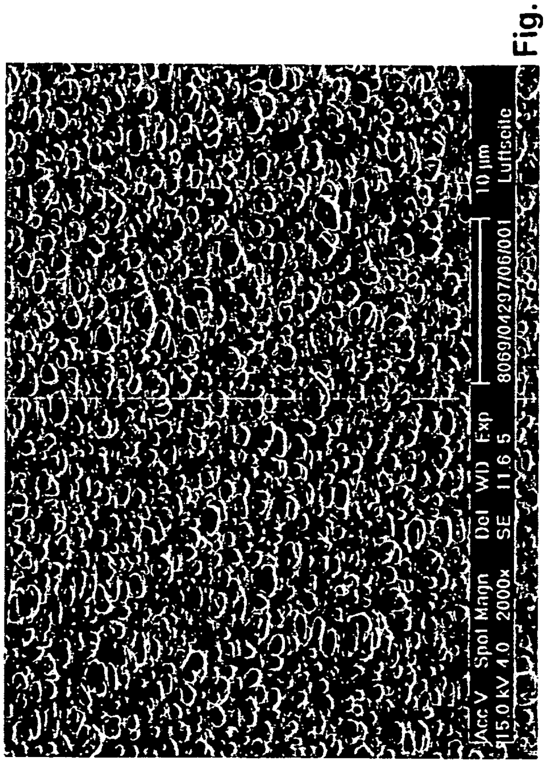


Fig. 4

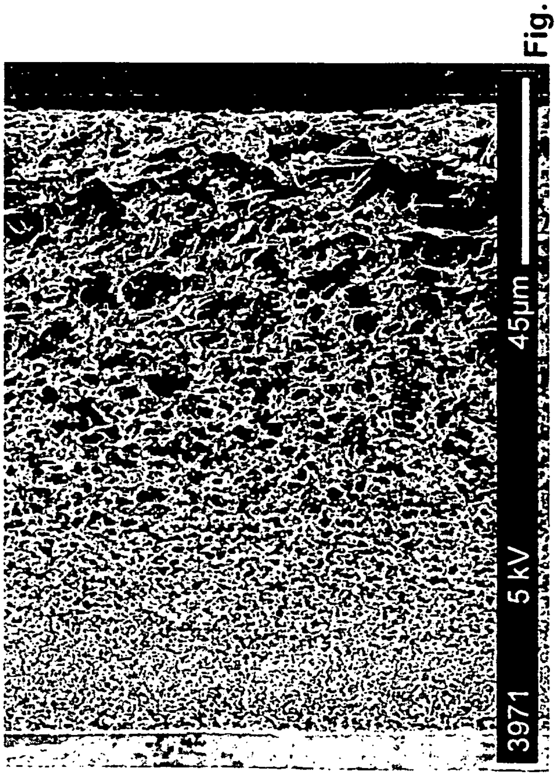


Fig. 5

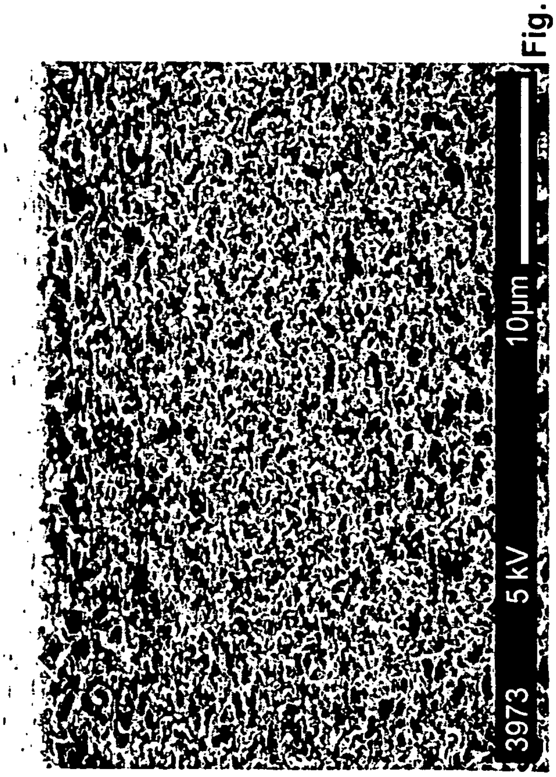


Fig. 6

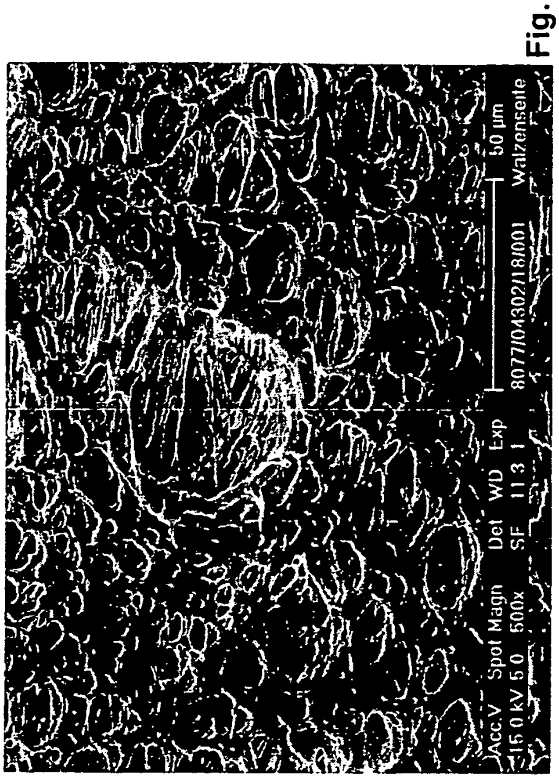


Fig. 7

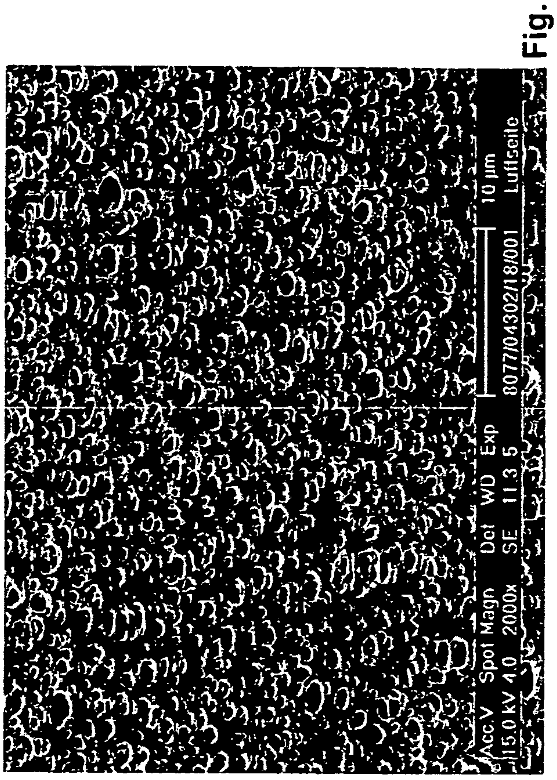


Fig. 8

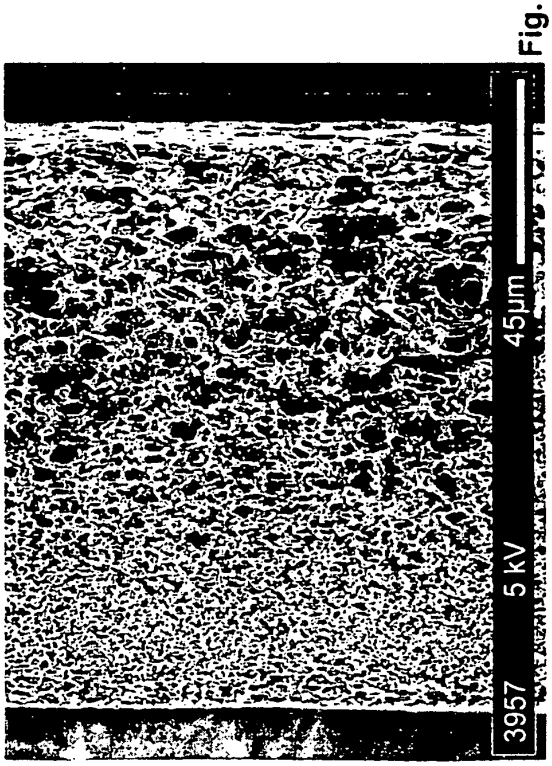


Fig. 9

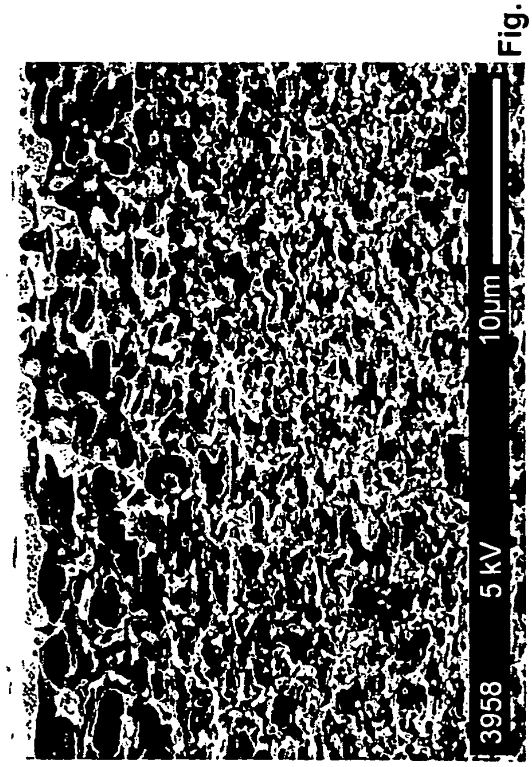


Fig. 10

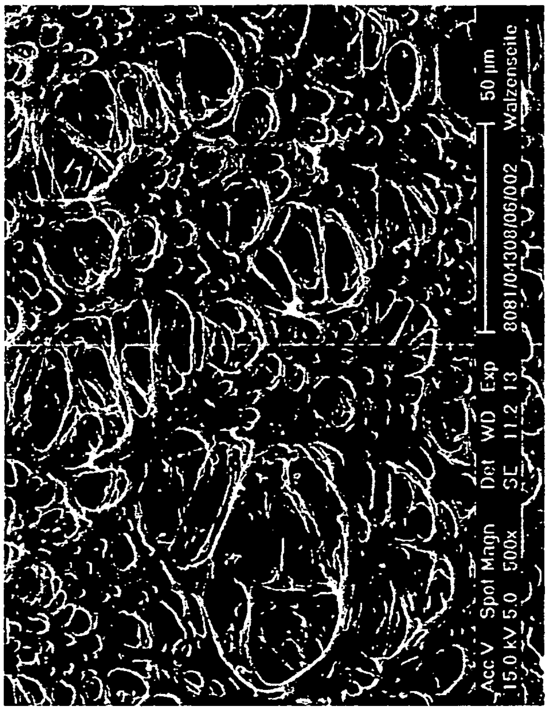


Fig. 11

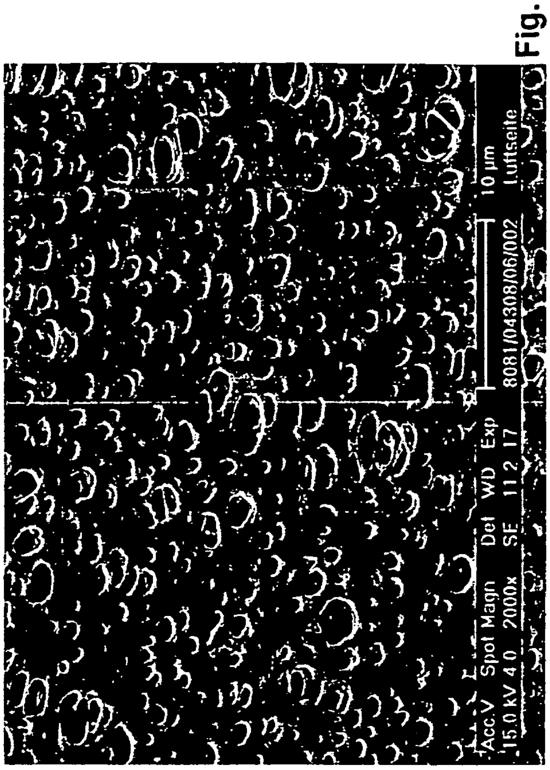


Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5866059 A
- US 6045899 A
- US 5906742 A
- US 4933081 A
- EP 361085 A
- DE 3617724 A

### In der Beschreibung aufgeführte Nicht-Patentliteratur

- HIMA-Vorschrift. Health Industry Manufacturers Association, 1982, vol. 4